# EUROPÄISCHE PATENTSCHRIFT

(11) **EP 2 470 384 B1**
(45) Veröffentlichungstag und Bekanntmachung des Hinweises auf die Patenterteilung: **30.04.2014**
(21) Anmeldenummer: 10740682.9
(22) Anmeldetag: 11.08.2010
(51) Int. Cl.: B60G 11/08, B60G 11/10, B60G 11/12, B60G 21/02, B60G 21/05, F16F 1/18, F16F 1/368

(54) **LAGERVORRICHTUNG EINER QUERBLATTFEDER**
MOUNTING DEVICE FOR A LATERALLY ORIENTATED LEAFSPRING
DISPOSITIF DE MONTAGE POUR UN RESSORT À LAME LATÉRALEMENT ORIENTÉ

(30) Priorität: 26.08.2009 DE 102009028896
(43) Veröffentlichungstag der Anmeldung: 04.07.2012
(73) Patentinhaber: ZF Friedrichshafen AG, 88038 Friedrichshafen (DE)
(72) Erfinder: FRUHMANN, Gabriele, A-6900 Bregenz (AT); HEIMANN, Jens, 88719 Stetten (DE); WAGNER, Volker, 74523 Schwaebisch Hall (DE); HOFMANN, Peter, 82131 Gauting (DE)
(86) Internationale Anmeldenummer: PCT/EP2010/061677
(87) Internationale Veröffentlichungsnummer: WO 2011/023548

(56) Entgegenhaltungen:
- EP-A1- 1 645 445
- EP-A2- 0 373 389
- EP-A2- 0 763 438
- EP-A2- 0 993 971
- WO-A1-2008/125076
- FR-A1- 2 543 073
- JP-B- 7 039 242

## Beschreibung

Die Erfindung betrifft eine Lagervorrichtung einer Querblattfeder gemäß der im Oberbegriff des Patentanspruches 1 näher definierten Art.

Aus der EP 1 645 445 B1 ist eine Radaufhängung für ein Kraftfahrzeug mit einer quer zum Kraftfahrzeug angeordneten Querblattfeder bekannt. Die Querblattfeder weist einen Mittelbereich und zwei einander gegenüberliegende Endbereiche auf, wobei die Querblattfeder im Mittelbereich über zwei Zentrallager mit einem Fahrzeugaufbau verbunden ist und in den Endbereichen über Endlager mit Radträgern in Wirkverbindung steht.

Die in montiertem Zustand der Querblattfeder zugewandten und mit höherer Steifigkeit ausgeführten Lagenelemente der Einlegeeinrichtungen sind in Fahrzeuglängsrichtung jeweils vor und nach der Querblattfeder miteinander verschraubt, womit die Einlegeeinrichtungen unabhängig von den Lageraußenschalen an der Querblattfeder vormontierbar sind. Des Weiteren sind Vorspannkräfte im Bereich der Einlegeeinrichtungen über die Schraubenverbindungen exakt einstellbar. Die Lageraußenschalen sind über eine separate Schraubenverbindung miteinander fest verbunden und liegen im Bereich einer Trennebene aneinander an.

Die Querblattfeder ist im Bereich einer Auflagefläche für die Einlegeeinrichtungen jeweils mit einer Ausnehmung ausgebildet, in die die Einlegeeinrichtungen zumindest bereichsweise und schlüssig eingreifen. Die Ausnehmungen der Querblattfeder sind in montiertem Zustand der Querblattfeder im Wesentlichen in Fahrzeuglängsrichtung orientiert und erstrecken sich über die gesamte Breite der Querblattfeder.

Nachteilhafterweise ist eine Montage der Radaufhängung, insbesondere eine Montage der Zentrallager im Bereich der Auflageflächen der Querblattfeder, erschwert, da eine Position der Zentrallager an der Querblattfeder in Fahrzeuglängsrichtung nicht eindeutig definiert ist und eine die einwandfreie Funktionsweise der Radaufhängung definierte Positionierung der Zentrallager an der Querblattfeder in Fahrzeuglängsnchtung während der Montage nicht gewährleistet ist.

Der vorliegenden Erfindung liegt daher die Aufgabe zugrunde, eine Lagervorrichtung einer im Bereich einer Fahrzeugachse eines Fahrzeuges montierbaren Querblattfeder zur Verfugung zu stellen, die auf einfache Art und Weise und in einem für die Funktionsweise erforderlichen Umfang montierbar ist.

Erfindungsgemäß wird diese Aufgabe mit einer Lagervorrichtung mit den Merkmalen des Patentanspruches 1 gelöst.

Die erfindungsgemäße Lagervorrichtung einer Querblattfeder, die im Bereich einer Fahrzeugachse eines Fahrzeuges montierbar ist, ist mit einer Lageraußenschaleneinrichtung und mit von der Lageraußenschaleneinrichtung zumindest bereichsweise umgriffenen Einlegeeinrichtungen, die jeweils wenigstens zwei Lagenelemente mit unterschiedlicher Steifigkeit aufweisen, ausgebildet. Die Einlegeeinrichtungen sind in montiertem Zustand jeweils zwischen der Lageraußenschaleneinrichtung und der Querblattfeder angeordnet und die Querblattfeder ist im Bereich einer Auflagefläche für die Einlegeeinrichtungen jeweils mit einer Ausnehmung ausgebildet, in die die Einlegeeinrichtungen zumindest bereichsweise formschlüssig eingreifen. Die Ausnehmungen der Querblattfeder sind in Bezug auf eine Fahrzeughochachse jeweils im Bereich einer Oberseite und einer Unterseite der Querblattfeder vorgesehen.

Erfindungsgemäß sind die Ausnehmungen der Querblattfeder in montiertem Zustand der Querblattfeder in Fahrzeuglängsrichtung jeweils von zwischen der Oberseite und der Unterseite und Seitenflächen gebildeten Randbereichen der Oberseite und der Unterseite zumindest bereichsweise begrenzt, wobei die Ausnehmungen in den Randbereichen eine geringere Tiefe aufweisen als in Bereichen zwischen den Randbereichen.

Durch die mit unterschiedlicher Steifigkeit ausgeführten Lagenelemente der Einlegeeinrichtungen wird eine für die Funktionsweise der Querblattfeder erforderliche Drehbewegung der Querblattfeder im Bereich der Lagervorrichtung bei gleichzeitig ausreichend hoher Lagersteifigkeit ermöglicht, womit bei gleichseitigem und wechselseitigem Einfedern im Bereich von Rädern der beiden Fahrzeugseiten unterschiedliche Federraten zur Verfügung stellbar sind.

Des Weiteren sind über die Querblattfeder auch Radführungsfunktionen durch die unterschiedlichen Steifigkeiten der Lagenelemente zur Verfügung stellbar, da eine Lagersteifigkeit in Fahrzeugquerrichtung beispielsweise entsprechend hoch einstellbar ist und eine Verschiebung der Querblattfeder in Fahrzeugquerrichtung auf einfache Art und Weise vermeidbar ist.

Zusätzlich ist auch eine Lagersteifigkeit der erfindungsgemäßen Lagervorrichtung in Fahrzeughochrichtung mit dem für einen ausreichenden Kraftschluss zwischen der Lagervorrichtung und der Querblattfeder in ausreichendem Umfang einstellbar. Dies bietet auf einfache Art und Weise die Möglichkeit, bei wechselseitiger Einfederung ein unerwünschtes und einem Starrkörper entsprechendes Verschieben oder Bewegen der Querblattfeder im Bereich der Lagervorrichtung zu vermeiden. Bei entsprechend hoher Lagersteifigkeit der erfindungsgemäßen Lagervorrichtung in Fahrzeughochrichtung stellt sich eine gezielte Verformung der Querblattfeder in Form eines sogenannten S-Schlages ein, aufgrund der sich im Vergleich zu einem gleichzeitigen Einfedern ohne entsprechenden S-Schlag im Bereich der Querblattfeder eine höhere wechselseitige Federrate ergibt.

Dadurch, dass die Einlegeeinrichtungen in den Auflageflächen der Querblattfeder zugewandten Anlageflächen mit Aufnahmeeinrichtungen ausgeführt sind, in die jeweils ein Bereich der Querblattfeder in montiertem Zustand der Einlegeeinrichtungen eingreift, sind im Betrieb eines Fahrzeuges wirkende Kräfte und Momente von den Einlegeeinrichtungen ohne Relativbewegung zwischen den Einlegeeinrichtungen und der Querblattfeder in die Querblattfeder einleitbar. Der Formschluss zwischen der Lagervorrichtung und der Querblattfeder ist vorzugsweise derart ausgeführt, dass aufgrund des Formschlusses in der Querblattfeder möglichst geringe zusätzliche Spannungen entstehen, die die Funktionsweise der Querblattfeder unter Umständen in unerwünschtem Umfang beeinträchtigen und die Lebensdauer der Querblattfeder verringern.

Über die zumindest bereichsweise Begrenzung der Ausnehmungen der Querblattfeder in montiertem Zustand der Querblattfeder in Fahrzeuglängsrichtung im Bereich der jeweils von zwischen der Oberseite und der Unterseite und Seitenflächen gebildeten Randbereichen der Oberseite und der Unterseite wird eine Montage der Lagervorrichtung in der für die Funktionsweise der Querblattfeder erforderlichen Position im Vergleich zu der aus dem Stand der Technik bekannten Lösung mit geringem konstruktiven Aufwand und auf kostengünstige Art und Weise vereinfacht.

Dadurch, dass die Einlegeeinrichtungen bei einer vorteilhaften Ausführungsform der erfindungsgemäßen Lagervorrichtung in den Auflageflächen der Querblattfeder zugewandten Anlageflächen jeweils mit wenigstens einer Aufnahmeeinrichtung ausgeführt sind, in die ein Bereich der Querblattfeder in montiertem Zustand der Einlegeeinrichtungen eingreift, ist ein zusätzlicher Formschluss zwischen der Querblattfeder und den Einlegeeinrichtungen vorgesehen, über den eine in Fahrzeuglängsrichtung definierte Position während einer Montage der Lagervorrichtung an der Querblattfeder vorgegeben ist und eine Montage der Lagervorrichtung an der Querblattfeder im Vergleich zu aus dem Stand der Technik bekannten Zentrallagern erheblich vereinfacht ist. Durch die durch den zusätzlichen Formschluss definierte Position der Lagervorrichtung an der Querblattfeder in Fahrzeuglängsrichtung ist auch eine einwandfreie Funktionsweise der Querblattfeder ohne zusätzliche Maßnahmen während der Montage gewährleistet.

Die in die Einlegeeinrichtungen eingreifenden Bereiche der Querblattfeder sind vorzugsweise im Bereich der Ausnehmung der Querblattfeder vorgesehen, womit ein Verlauf von Fasern einer vorzugsweise aus Verbundwerkstoff hergestellten Querblattfeder nur genngfügig von einem für die Funktionsweise der Querblattfeder erforderlichen Verlauf im Bereich der Lagervorrichtung abweicht.

Bei einer einfach zu montierenden Weiterbildung der erfindungsgemäßen Lagervorrichtung weist die Lageraußenschaleneinrichtung zwei miteinander verbindbare Lageraußenschalen auf, welche die Einlegeeinrichtungen zumindest bereichsweise umgreifen.

Bei einer bauraumgünstigen Ausführungsform der erfindungsgemäßen Lagervorrichtung sind die Einlegeeinrichtungen über Lageraußenschalen miteinander und mit einem Fahrzeugaufbau eines Fahrzeuges verbindende Schraubeneinrichtung zumindest kraftschlüssig mit den Lageraußenschalen und der Querblattfeder verbindbar. Die baumräumgünstige Ausführung resultiert aus der Tatsache, dass die Lagervorrichtung lediglich im Bereich der Lageraußenschalen mit einer Schraubeneinnchtung an der Querblattfeder montierbar ist, die wiederum zur festen Verbindung zwischen der Lagervorrichtung und der Fahrzeugkarosserie bzw. einem damit verbundenen Hilfsrahmen vorgesehen ist. Darüber hinaus wird über die Schraubeneinrichtung in montiertem Zustand der Lagervorrichtung die auf die Einlegeeinrichtungen aufzubringende Vorspannkraft zur Verfügung gestellt.

Da im Bereich der Einlegeeinrichtungen keine zusätzlichen Schraubeneinrichtungen vorgesehen sind, sind die Lagenelemente mit geringen Abmessungen ausführbar und auch kostengünstig herstellbar, da beispielsweise keine Gewindegänge in die Lagenelemente einzuschneiden sind.

Eine Übertragung der im Betrieb eines Fahrzeuges wirkenden Kräfte und Momente zwischen dem Fahrzeugaufbau und den Rädern über die Querblattfeder und die Lagervorrichtung ist dadurch weiter verbesserbar, wenn die Querblattfeder in Bezug auf eine Fahrzeughochachse ober- und unterseitig angeordneten Anlagebereichen für die Einlegeeinrichtungen mit konvexen Erhebungen ausgebildet ist und eine formschlüssige Weiterleitung der Lasten im Betrieb möglich ist.

Um die im Betrieb eines Fahrzeuges wirkenden Kräfte und Momente von den mit niedrigerer Steifigkeit ausgeführten Lagenelementen mit möglichst geringer Flächenpressung im Bereich zwischen den Einlegeeinrichtungen und der Querblattfeder übertragen zu können, ist zwischen den Lagenelementen der Einlegeeinrichtungen und der Querblattfeder jeweils ein vorzugsweise wenigstens annähernd halbzylindrisch ausgeführtes Einlegeteil der Einlegeeinrichtungen angeordnet, die mit höherer Steifigkeit ausgebildet sind als die mit geringerer Steifigkeit ausgeführten Lagenelemente.

Unter dem Begriff wenigstens annähernd halbzylindrisch ausgeführte Einlegeteile werden vorliegend alle volumetrischen Gebilde subsumiert, welche zumindest mit wenigstens annähernd kreissegmentartigen Grundflächen ausgebildet sind, die zueinander beabstandet sind. Dabei besteht die Möglichkeit, dass der die Sehnenenden verbindende Bogen der Grundfläche kreisförmig oder elliptisch ausgeführt ist. Bei Weiterbildungen ist die Sehne gerade oder ebenfalls gekrümmt, vorzugsweise konvex, ausgebildet. Im Bereich der Übergänge zwischen der Sehne und dem Bogen der Grundfläche können in Abhängigkeit des jeweiligen Anwendungsfalles Kanten oder entsprechende Abrundungen vorgesehen sein.

Damit im Betrieb eines Fahrzeuges Beschädigungen der Querblattfeder im Bereich der Lagervorrichtung vermieden werden können, sind die Einlegeteile der Einlegeeinrichtungen in zumindest in montiertem Zustand der Querblattfeder zugewandten Anlagebereichen mit einer gummielastischen Schutzschicht ausbildbar.

Eine Lagersteifigkeit der erfindungsgemäßen Lagervorrichtung ist dadurch variierbar, dass zumindest die mit niedngerer Steifigkeit ausgebildeten Lagenelemente Aussparungen aufweisen.

Bei einer weiteren vorteilhaften Ausführungsform der erfindungsgemäßen Lagervorrichtung sind die mit höherer Steifigkeit ausgebildeten Lagenelemente wenigstens in den Endbereichen zumindest bereichsweise mit einer gummielastischen Schutzschicht ausgebildet, um bei stärkeren Verformungen der Querblattfeder eine Verletzung bzw. Beschädigung der Querblattfeder auf einfache Art und Weise zu vermeiden.

Die jeweils mit der niedrigeren Steifigkeit ausgebildeten Lagenelemente der Einlegeeinrichtungen übergreifen die Lageraußenschalen bei einer vorteilhaften Ausführungsform der erfindungsgemäßen Vorrichtung mit in montiertem Zustand in Fahrzeugquerrichtung weisenden vorzugsweise wulstartigen Endbereichen, wobei die Lageraußenschaleneinrichtung jeweils vorzugsweise mit Vorsprüngen in die wulstartigen Endbereiche der Lagenelemente eingreift. Damit sind die Einlegeeinrichtungen gegenüber der Lageraußenschaleneinrichtung in Fahrzeugquernchtung entsprechend positionierbar während die Positionierung zwischen den Einlegeeinrichtungen und der Lageraußenschaleneinrichtung in Fahrzeuglängsrichtung bei einer weiteren vorteilhaften Ausführungsform der erfindungsgemäßen Lagervorrichtung über in die Lagenelementen bzw dessen wulstartigen Endbereiche eingreifende Vorsprünge der Lageraußenschaleneinrichtung gewährleistet ist und somit eine einfache Montage der Lagervornchtung möglich ist

Bei einer weiteren vorteilhaften Ausführungsform der erfindungsgemäßen Lagervorrichtung übergreifen die mit niedrigerer Steifigkeit ausgebildeten Lagenelemente die Querblattfeder mit Anschlagbereichen in montiertem Zustand in Fahrzeuglängsrichtung und in Fahrzeughochrichtung jeweils zumindest bereichsweise, um die mehrteilig aufgebauten Einlegeeinrichtungen während der Montage gegenüber der Querblattfeder auf einfache Art und Weise positionieren zu können und zum anderen eine weiche Abstützung der Querblattfeder in Fahrzeuglängsrichtung im Bereich der Lageraußenschalen auf konstruktiv einfache Art und Weise zur Verfügung stellen zu können

Die Anschlagbereiche können in der Querblattfeder zugewandten Anlagebereichen und/oder in den der Lageraußenschaleneinrichtung zugewandten Anlagebereichen mit wenigstens annähernd in Fahrzeuglängsrichtung orientierten Vorsprüngen und/oder Ausnehmungen ausgeführt sein, um unterschiedliche Lagersteifigkeiten über der Verschiebung der Querblattfeder im Bereich der erfindungsgemäßen Lagervorrichtung zu erreichen, wobei die in Fahrzeuglängsrichtung als Lageranschläge wirkenden Anschlagbereiche in Bezug auf eine Fahrzeugvorderseite vor und hinter der Querblattfeder unterschiedlich ausgeführt sein können, um entsprechend unterschiedliche Lagercharakteristiken darstellen zu können.

Bei einer weiteren vorteilhaften Ausführungsform der erfindungsgemäßen Lagervorrichtung umfasst die Lageraußenschaleneinrichtung ein einteiliges Lagerringelement und die Einlegeeinrichtungen sind über Spannelemente zumindest kraftschlüssig mit dem Lagerringelement und der Querblattfeder in Wirkverbindung bringbar. Diese Ausführungsform der Lagervorrichtung ist im Vergleich zu aus dem Stand der Technik bekannten Lagervorrichtungen bauraumgünstig ausgebildet, da diese lediglich im Bereich des Lagerringelementes mit einem Fahrzeugaufbau bzw. einem mit dem Fahrzeugaufbau verbundene Hilfsrahmen zu montieren ist. Die feste Verbindung zwischen der Lagervorrichtung und der Querblattfeder wird über die mit den Einlegeeinrichtungen in montiertem Zustand zusammenwirkenden Spannelemente hergestellt, über die die auf die Einlegeeinrichtungen aufzubringende Vorspannkraft zur Verfügung gestellt wird.

Durch die mit einem geschlossenen und einteiligen Lagerringelement ausgeführte Lageraußenschaleneinrichtung ist die Vorspannkraft im Bereich der Lagervorrichtungen gut einstellbar, die im Gegensatz zu einer über eine Verschraubung aufgebrachte Vorspannkraft, die zum Verbinden von zwei getrennten Lageraußenschalen vorgesehen ist, aufgrund von Setzvorgängen und dergleichen in geringerem Umfang absinkt, Darüber hinaus ist durch das geschlossene Lagerringelement auch ein guter Kraftfluss gewährleistet. Im Gegensatz zur zweiteiligen Lageraußenschalenausführung ist auch eine Relativverschiebung zwischen den beiden Lageraußenschalen durch die geschlossene Ringform des Lagerringelementes auf einfache Art und Weise verhindert.

Bei einer vorteilhaften Weiterbildung der erfindungsgemäßen Lagervorrichtung sind die Spannelemente mit zumindest einem keilförmigen Bereich ausgebildet, die jeweils zwischen den Einlegeeinrichtungen und der Querblattfeder und/oder zwischen den Einlegeeinrichtungen und dem Lagerringelement anordenbar sind. Damit ist die für die Funktionsweise der Lagervorrichtung erforderliche Vorspannkraft unabhängig von Fertigungstoleranzen im Bereich der Lagervorrichtung und auch im Bereich der Querblattfeder auf einfache Art und Weise während der Montage einstellbar, da eventuell vorliegende Fertigungstoleranzen durch Variieren des Einschiebweges der Spannelemente zwischen die Einlegeeinrichtungen und der Querblattfeder und/oder zwischen den Einlegeeinrichtungen und dem Lagerringelement ausgleichbar sind.

Bei einer einfach zu montierenden und durch einen einfachen konstruktiven Aufbau gekennzeichneten Ausführungsform der erfindungsgemäßen Lagervorrichtung ist wenigstens ein Teil der Spannelemente zur Erzeugung einer spannelementseitigen Vorspannkraft auf die Einlegeeinrichtungen und die Querblattfeder mit dem Lagerringelement in Wirkverbindung bringbar und die Vorspannkraft an einer Schulter des Lagerringelementes abstützbar.

Bei einer weiteren vorteilhaften Ausführungsform der erfindungsgemäßen Lagervorrichtung übergreifen die mit niedrigerer Steifigkeit ausgebildeten Lagenelementen die Querblattfeder mit Anschlagbereichen in montiertem Zustand in Fahrzeuglängsrichtung und in Fahrzeughochrichtung jeweils zumindest bereichsweise, um die mehrteilig aufgebauten Einlegeeinrichtungen während der Montage gegenüber der Querblattfeder auf einfache Art und Weise positionieren zu können und zum anderen eine weiche Abstützung der Querblattfeder in Fahrzeuglängsrichtung im Bereich der Lageraußenschalen auf konstruktiv einfache Art und Weise zur Verfügung stellen zu können.

Die Anschlagbereiche können in der Querblattfeder zugewandten Anlagebereichen und/oder in den den Lageraußenschalen zugewandten Anlagebereichen mit wenigstens annähernd in Fahrzeuglängsrichtung orientierten Vorsprüngen und/oder Ausnehmungen ausgeführt sein, um unterschiedliche Lagersteifigkeiten über der Verschiebung der Querblattfeder im Bereich der erfindungsgemäßen Lagervorrichtung zu erreichen, wobei die in Fahrzeuglängsrichtung als Lageranschläge wirkenden Anschlagbereiche in Bezug auf eine Fahrzeugvorderseite vor und hinter der Querblattfeder unterschiedlich ausgeführt sein können, um entsprechend unterschiedliche Lagercharakteristiken darstellen zu können.

Weitere Vorteile und vorteilhafte Ausführungsformen des erfindungsgemäßen Gegenstandes ergeben sich aus den Patentansprüchen und den nachfolgend anhand der Zeichnungen beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Sowohl die in den Unteransprüchen angegebenen Merkmale als auch die in den nachfolgenden Ausführungsbeispielen der erfindungsgemäßen Lagervorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Es zeigt:
- Fig. 1: eine stark schematisierte Darstellung einer Querblattfeder mit zwei äußeren Führungslagern und zwei im mittleren Bereich der Querblattfeder angeordneten erfindungsgemäßen Lagervorrichtungen;
- Fig. 2: eine dreidimensionale Darstellung einer ersten Ausführungsform der erfindungsgemäßen Lagervorrichtung, welche in einem mittleren Bereich einer Querblattfeder angeordnet ist;
- Fig. 3: die Lagervorrichtung gemäß Fig. 2 in einer Längsschnittansicht entlang einer in Fig. 2 näher gezeigten Längsschnittebene E3;
- Fig. 4: die Lagervorrichtung gemäß Fig. 2 in einer Schnittansicht entlang einer in Fig. 2 näher gezeigten Querschnittebene E4;
- Fig. 5: die Lagervorrichtung gemäß Fig. 2 in einer dreidimensionalen Einzelansicht in einer Explosionsdarstellung;
- Fig. 6: eine alternative Ausführungsform einer Lageraußenschale der Lagervorrichtung gemäß Fig. 2;
- Fig. 7: eine Fig. 2 entsprechende Darstellung einer Querblattfeder, die mittels einer nicht erfindungsgemäßen Lagervorrichtung an einem Fahrzeugaufbau gelagert ist;
- Fig. 8: eine Längsschnittansicht der Lagervorrichtung gemäß Fig. 7 entlang einer in Fig. 7 näher gezeigten Schnittebene E8;
- Fig. 9: eine Seitenansicht der Lagervorrichtung gemäß Fig. 7;
- Fig. 10: eine Querschnittansicht der Lagervorrichtung gemäß Fig. 7 entlang einer in Fig. 7 näher dargestellten Schnittebene E10;
- Fig. 11: eine Fig. 8 entsprechende Darstellung einer zweiten nicht erfindungsgemäßen Lagervorrichtung;
- Fig. 12: eine Fig. 10 entsprechende Ansicht der Lagervorrichtung gemäß Fig. 11;
- Fig. 13 bis Fig. 21: jeweils eine Teilansicht verschiedener Ausführungsformen der Querblattfeder in einem Montagebereich der Lagervorrichtung;
- Fig. 22: eine dreidimensionale Teildarstellung der Querblattfeder mit einer weiteren Ausführungsform der erfindungsgemäßen Lagervorrichtung, welche in einem mittleren Bereich der Querblattfeder angeordnet ist;
- Fig. 23: die Lagervorrichtung gemäß Fig. 22 in einer Längsschnittansicht entlang einer in Fig. 22 näher gezeigten Längsschnittebene E23, die sich in Fahrzeughoch- und Fahrzeugquerrichtung erstreckt;
- Fig. 24: eine Fig. 22 entsprechende Darstellung einer weiteren nicht erfindungsgemäßen Lagervorrichtung;
- Fig. 25: eine Fig. 23 entsprechende Darstellung der Lagervorrichtung gemäß Fig. 24 in einer Längsschnittansicht entlang einer in Fig. 24 näher gezeigten Längsschnittebene E25, die sowohl in Fahrzeughochrichtung als auch in Fahrzeugquerrichtung orientiert ist;
- Fig. 26: eine Fig. 22 entsprechende Darstellung einer weiteren nicht erfindungsgemäßen Lagervorrichtung;
- Fig. 27: eine Fig. 23 entsprechende Längsschnittansicht der Lagervorrichtung gemäß Fig. 26 entlang einer in Fig. 26 näher dargestellten Längsschnittebene E27, welche sich sowohl in Fahrzeughoch- als auch in Fahrzeugquerrichtung erstreckt;
- Fig. 28: eine Fig. 22 entsprechende Darstellung einer weiteren nicht erfindungsgemäßen Lagervorrichtung;
- Fig. 29: eine Fig. 23 entsprechende Längsschnittansicht der Lagervorrichtung gemäß Fig. 28 entlang einer sich in Fahrzeughoch- und Fahrzeugquerrichtung erstreckenden Schnittebene E29;
- Fig. 30: eine Fig. 22 entsprechende Darstellung einer weiteren nicht erfindungsgemäßen Lagervorrichtung;
- Fig. 31: eine Fig. 23 entsprechende Darstellung der Lagervorrichtung gemäß Fig. 30 entlang einer sich in Fahrzeughoch- und Fahrzeugquerrichtung erstreckenden Schnittebene E31;
- Fig. 32a: eine schematisierte vergrößerte Teileinzelansicht eines definierten Oberflächenbereiches eines Spannelementes der erfindungsgemäßen Lagervorrichtung; und
- Fig. 32b: eine vereinfachte Seitenansicht des in Fig. 32a gezeigten Oberflächenbereiches.

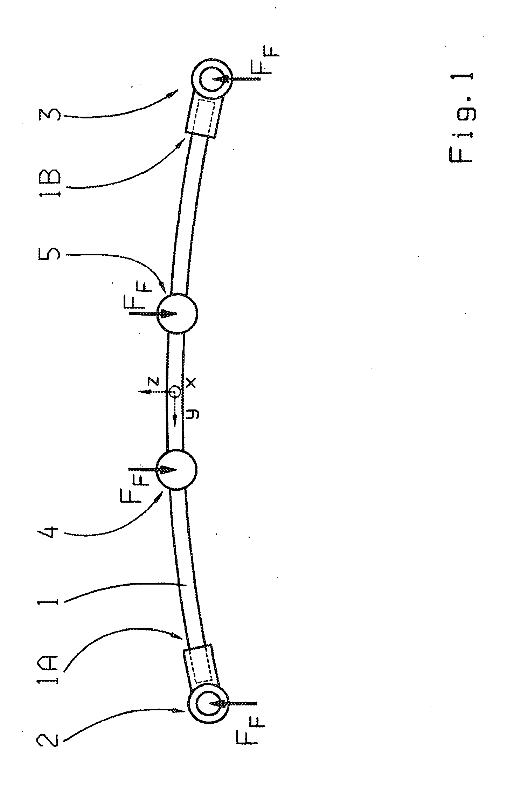

In Fig. 1 ist eine stark schematisierte Darstellung einer Querblattfeder 1 gezeigt, die im Bereich einer Fahrzeugachse eines Fahrzeuges montierbar ist. Die Querblattfeder 1 ist in ihren Rädern der Fahrzeugachse zugewandten Endbereichen 1 A, 1 B in äußeren Lagern 2, 3 bzw. Führungslagern, die vorliegend als sogenannte Lagerschuhe ausgeführt sind, gelagert und mit Radträgern der Fahrzeugachse verbunden.

In mittleren Bereichen der Querblattfeder 1 ist diese über als Zentrallager fungierende Lagervorrichtungen 4, 5 direkt mit einem Fahrzeugaufbau oder mit einem mit dem Fahrzeugaufbau wiederum verbundenen Hilfsrahmen wirkverbunden und an diesem gelagert. Die Lagervorrichtungen 4 und 5 sind symmetrisch zur Mitte der Querblattfeder 1 angeordnet und verbinden diese in der nachfolgend beschriebenen Art und Weise mit dem Fahrzeugaufbau des Fahrzeuges, wobei Drehungen der Querblattfeder 1 im Bereich der Lagervorrichtungen 4 und 5 bei gleich- und wechselseitigen Federungen im erforderlichen Umfang möglich sind, damit über die Querblattfeder 1 bei einem gleichseitigen und einem wechselseitigen Einfedern in den Bereichen 1 A und 1 B unterschiedliche Federraten zur Verfügung stellbar sind.

Die Lagervorrichtungen 4 und 5 weisen in Fahrzeugquerrichtung bzw. in y-Richtung eine hohe Lagersteifigkeit auf und verformen sich in y-Richtung während des Betriebes eines mit der Querblattfeder 1 und den Lagereinrichtungen 4 und 5 ausgeführten Fahrzeuges nur geringfügig, um neben der vorbeschriebenen Federungsfunktionalität auch Radführungsaufgaben übernehmen zu können. Die hohe Lagersteifigkeit in y-Richtung bietet zudem die Möglichkeit, eine Gesamtverschiebung der Querblattfeder 1 in Fahrzeugquerrichtung bzw. in y-Richtung auf einfache Art und Weise zu vermeiden.

Damit der jeweils zwischen den Lagervorrichtungen 4 und 5 und der Querblattfeder 1 für die einwandfreie Funktionalität der Querblattfeder 1 erforderliche Kraftschluss herstellbar ist, sind die beiden Lagervorrichtungen 4 und 5 auch in Fahrzeughochrichtung bzw. in z-Richtung mit einer entsprechend hohen Lagersteifigkeit ausgeführt. Außerdem wird durch die hohe Lagersteifigkeit der Lagervorrichtungen 4 und 5 in Fahrzeughochrichtung erreicht, dass die Querblattfeder 1 bei wechselseitiger Einfederung der Endbereiche 1 A und 1 B nicht das Verschieben eines Starrkörpers im Bereich der Lagervorrichtungen 4 und 5 aufweist. Die Querblattfeder 1 wird bei einer wechselseitigen Einfederung einem sogenannten S-Schlag entsprechend gezielt verformt und stellt eine entsprechend höhere wechselseitige Federrate zur Verfügung.

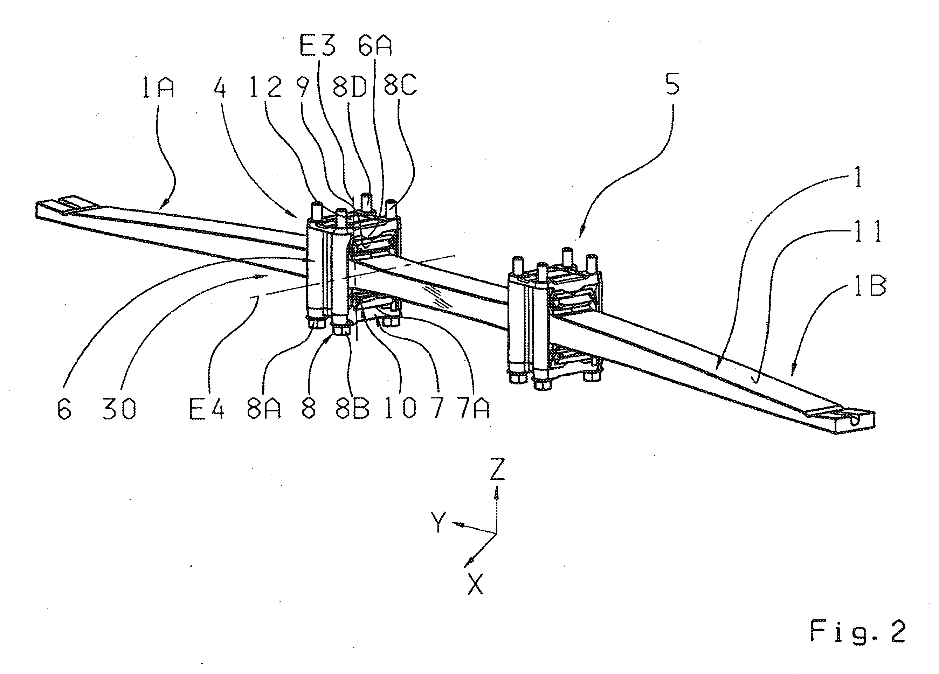

Fig. 2 zeigt eine dreidimensionale Darstellung der Querblattfeder 1, die als ein balkenähnliches Federelement ausgebildet ist. Die Querblattfeder 1 ist über die zwei Lagervorrichtungen 4, 5 mit einem in der Zeichnung nicht näher dargestellten Fahrzeugaufbau und über die beiden Endbereichslagereinrichtungen 2, 3 mit den Rädern einer Fahrzeugachse des Fahrzeuges verbunden und in den Endbereichen 1 A, 1 B gelagert. Die sogenannte Vierpunktlagerung ermöglicht im Bereich der Querblattfeder 1 sowohl eine Hubfederung als auch eine Wankfederung zur Verfügung zu stellen, womit konventionelle Aufbaufedern sowie aus der Praxis bekannte Stabilisatoreinrichtungen nicht vorzusehen sind. Bei entsprechender Ausführung der Lagervorrichtungen 4 und 5 sowie der Endbereichslagerungen 2 und 3 sind über die Querblattfeder 1 neben den letztgenannten Federungsfunktionen auch Radführungsfunktionen zur Verfügung stellbar. Das vorgestellte Federsystem bietet neben einem hohen Kosteneinsparungspotential bei entsprechender Werkstoffwahl zur Herstellung der Querblattfeder 1, beispielsweise Faserverbundwerkstoffe, auch die Möglichkeit der Gewichtsreduzierung im Bereich einer Fahrzeugachse.

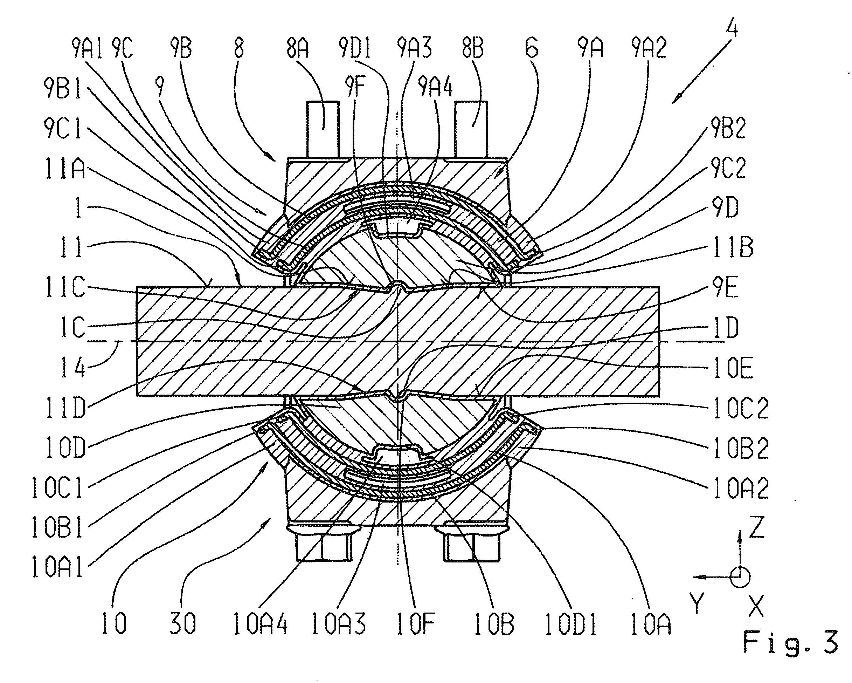

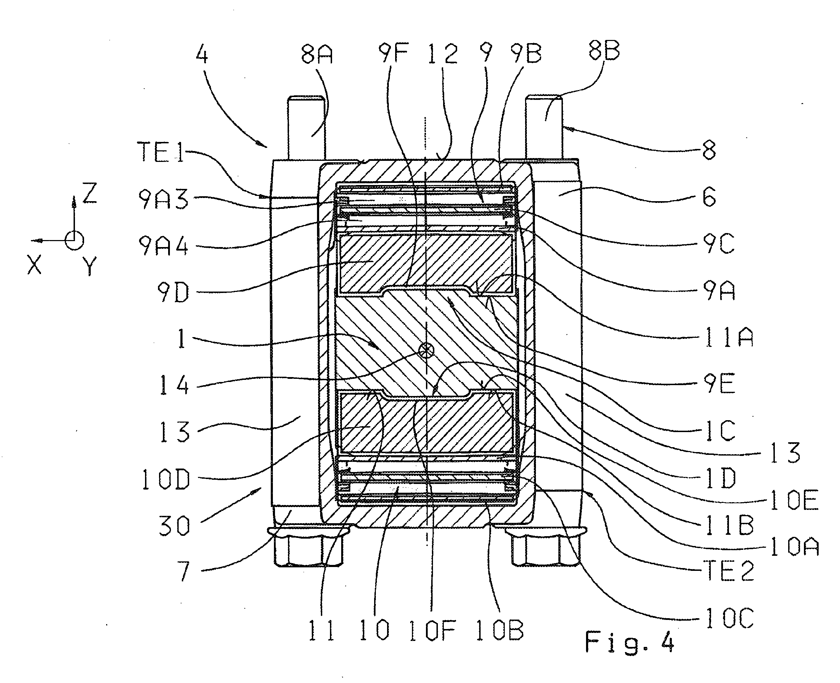

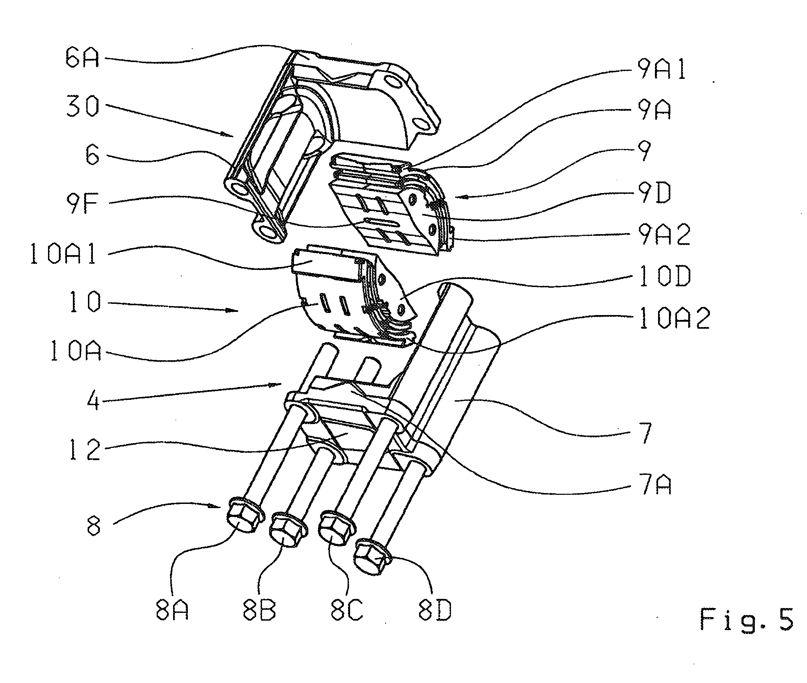

In Fig. 3 ist eine Längsschnittansicht der Lagervorrichtung 4 entlang einer in Fig. 2 lediglich durch eine strichpunktierte Linie grafisch näher dargestellte Schnittebene E3 gezeigt, die einer sogenannten yz-Schnittebene entspricht. In Fig. 4 ist eine Querschnittansicht der Lagervorrichtung 4 entlang einer in Fig. 2 ebenfalls als strichpunktierte Linie grafisch wiedergegebene Querschnittebene E4 dargestellt, wobei die Querschnittebene E4 im Wesentlichen einer sogenannten xz-Querschnittebene entspricht. In Fig. 5 ist eine dreidimensionale Explosionsdarstellung der Lagervorrichtung 4 in Einzelansicht grafisch wiedergegeben.

Die Lagervorrichtungen 4 und 5 weisen grundsätzlich den gleichen Aufbau auf, weshalb in der nachfolgenden Beschreibung zu Fig. 2 bis Fig. 6 im Wesentlichen lediglich auf die Lagervorrichtung 4 näher eingegangen wird.

Die Lagervorrichtung 4 umfasst eine Lageraußenschaleneinrichtung 30 mit zwei miteinander verbindbaren Lageraußenschalen 6, 7, die vorliegend über eine vier Schraubenelemente 8A bis 8D umfassende Schraubeneinrichtung 8 miteinander verbunden sind, wobei über die schraubeneinrichtungsseitige Verbindung eine für die Herstellung des Kraftschlusses zwischen der Lagervorrichtung 4 und der Querblattfeder 1 erforderliche Vorspannkraft auf zwischen den Lageraußenschalen 6 und 7 angeordnete Einlegeeinrichtungen 9, 10 aufbringbar ist. Die Lagervorrichtung 4 ist über die Schraubeneinrichtung 8 auch mit dem Fahrzeugaufbau bzw. dem Hilfsrahmen verbindbar.

Die Lageraußenschalen 6 und 7 sind vorliegend winkelförmig bzw. L-förmig ausgebildet und grenzen im Bereich von zwei Trennebenen TE1 und TE2 aneinander an. Zusätzlich sind die Lageraußenschalen 6 und 7 in ihren die Querblattfeder 1 in Fahrzeughochrichtung übergreifenden Bereichen jeweils mit einem Steg 13 ausgebildet, mittels welchen eine Bewegung der Einlegeeinrichtungen 9 und 10 in Fahrzeuglängsrichtung bzw. in x-Richtung begrenzt ist.

Zudem sind die Lageraußenschalen 6 und 7 zur Vereinfachung einer Montage mit Zentriereinrichtungen ausführbar, die in entsprechende Bohrungen der Lageraußenschalen 6 und 7 eingepasste Passstifte umfassen, wobei es im Ermessen des Fachmannes liegt in Abhängigkeit des jeweils vorliegenden Anwendungsfalles zur Zentrierung der Lageraußenschalen 6 und 7 zueinander Feder-Nut-Ausführungen oder dergleichen vorzusehen.

Sowohl die beiden Lageraußenschalen 6 und 7 als auch die Einlegeeinrichtungen 9 und 10 sind vorliegend identisch ausgebildet, um die Herstellkosten der Lagervorrichtung 4 möglichst gering zu halten. Die Einlegeeinrichtungen 9 und 10 sind vorliegend mit drei Lagenelementen 9A bis 9C bzw. 10A bis 10C und jeweils einem im Wesentlichen halbzylindrisch ausgeführten Einlegeteil 9D bzw. 10D ausgebildet. Dabei sind die Lagenelemente 9A und 10A der Einlegeeinrichtungen 9 und 10 vorliegend aus gummielastischem Material hergestellt, welches während einer Vulkanisation auf die aus Blech hergestellten Lagenelementen 9B, 9C bzw. 10B, 10C sowie die vorliegend ebenfalls aus Metall hergestellten Einlegeteile 9D und 10D aufgebracht ist bzw. die Lagenelemente 9B, 9C bzw. 10B, 10C sowie die Einlegeteile 9D bzw. 10D umschließt.

Die Einlegeteile 9D und 10D sind auch aus Kunststoff, Faserverbundwerkstoffen, Naturwerkstoffen, wie Holz, Stein und dergleichen, sowie aus verschiedenen Metallwerkstoffen herstellbar.

Die Lagenelemente 9B, 9C bzw. 10B, 10C sind mit höherer Steifigkeit als die Lagenelemente 9A bzw. 10A ausgeführt und weisen zwischen in axialer Richtung der Querblattfeder 1 orientierten Endbereichen 9B1, 9B2, 9C1, 9C2 bzw. 10B1, 10B2, 10C1, 10C2 halbschalenförmige, im Wesentlichen hohlzylindrisch und konvex ausgebildete Bereiche auf. Die Endbereiche 9B1, 9B2 bzw. 10B1, 10B2 der Lagenelemente 9B bzw. 10B sind in Bezug auf die Oberfläche 11 über konkav gekrümmte Bereiche mit den konvexen Bereichen verbunden und von der Oberfläche 11 der Querblattfeder 1 weggerichtet, womit lagenelementseitige Beschädigungen der Oberfläche 11 bei großen Auslenkungen der Querblattfeder 1 auf konstruktiv einfache Art und Weise vermieden werden. Beschädigungen der Oberfläche 11 der Querblattfeder 1 sind zusätzlich durch die lagenelementseitige bzw. gummiartige Beschichtung der Lagenelemente 9B, 9C bzw. 10B, 10C und der Einlegeteile 9D bzw. 10D zusätzlich weiter reduziert.

Die zwischen den Einlegeteilen 9D bzw. 10D und Anlageflächen 11 A, 11 B der Querblattfeder 1 vorgesehenen Schutzschichtbereiche der Lagenelemente 9A bzw. 10A schützen die Oberfläche 11 der Querblattfeder 1 bei schwingender Belastung ausreichend gegen unerwünschte Beschädigungen, welche die Lebensdauer der Querblattfeder in unerwünschtem Umfang beeinträchtigen.

Zusätzlich ist auch das Eindringen von feinen Schmutzpartikeln zwischen die Einlegeteile 9D und 10D und die Querblattfeder 1 über die Schutzschicht verhinderbar. Dabei ist es auch denkbar, dass die Einlegeteile 9D und 10D zum Vermeiden eines Schmutzpartikeleintritts mit der Oberfläche 11 der Querblattfeder 1 verklebt werden, wobei dies sowohl bei der Ausführung mit als auch ohne Schutzschicht vorgesehen sein kann.

Des Weiteren sind über die Vulkanisationsschicht der Einlegeteile 9D und 10D Fertigungstoleranzen im Bereich des Formschlusses zwischen der Lagervorrichtung 4 der Querblattfeder 1 ausgleichbar und ein Reibbeiwert zwischen den Einlegeteilen 9D und 10D und der Querblattfeder 1 durch eine geeignete Materialauswahl und eine entsprechende Oberflächenbeschaffenheit der Schutzschicht erhöhbar.

Die Einlegeeinrichtungen 9 und 10 sind über wulstartige Endbereiche 9A1, 9A2 bzw. 10A1, 10A2 der Lagenelemente 9A bzw. 10A formschlüssig mit den Lageraußenschalen 6 bzw. 7 verbunden, womit die Einlegeeinrichtungen 9 und 10 während einer Montage der Lagervorrichtung 4 in y-Richtung gegenüber der Lagerschale 6 bzw. der Lagerschale 7 positioniert sind. Zusätzlich erfolgt eine Positionierung der Einlegeeinrichtungen 9 und 10 in x-Richtung bzw. in Fahrzeuglängsrichtung während der Montage über Zentrierbereiche 6A, 7A der Lageraußenschalen 6 und 7, die in montiertem Zustand der Lagervorrichtung 4 in die wulstartigen Endbereiche 9A1, 9A2 bzw. 10A1, 10A2 der Lagerelemente 9A bzw. 10A formschlüssig eingreifen.

Die beiden Lageraußenschalen 6 und 7 werden während der Montage auf die Einlegeeinrichtungen 9 und 10 aufgesteckt und durch Einkerbungen der wulstartigen Endbereiche 9A1, 9A2 bzw. 10A1, 10A2, in die die Vorsprünge 6A, 7A der Lageraußenschalen 6 und 7 eingreifen, in den Lageraußenschalen 6 und 7 positioniert.

Die Integration der Blechlagen bzw. Lagenelemente 9B und 9C bzw. 10B, 10C in die gummielastischen Lagenelemente 9A und 10A ist zum Einstellen der geforderten Lagersteifigkeiten vorgesehen. Zusätzlich sind im Bereich der Lagenelemente 9A und 10A Hohlräume bzw. Aussparungen 9A3, 9A4 bzw. 10A3, 10A4 vorgesehen, um die Lagersteifigkeit der Lagervorrichtung 4 an die vorliegenden Anforderungen anzupassen. Die Einlegeteile 9D und 10D sind jeweils in den Lagenelementen 9C bzw. 10C zugewandten Bereichen mit Ausnehmungen 9D1 bzw. 10D1 ausgebildet.

Des Weiteren sind die Einlegeeinrichtungen 9 und 10 in den Auflageflächen 11A und 11 B der Querblattfeder 1 zugewandten Anlageflächen 9E und 10E jeweils mit wenigstens einer Aufnahmeeinrichtung 9F bzw. 10F ausgeführt, in die jeweils ein Bereich 1C bzw. 1D der Querblattfeder 1 in montiertem Zustand der Einlegeeinrichtungen 9 und 10 formschlüssig eingreift. Zusätzlich weist die Querblattfeder 1 in Fahrzeughochrichtung bzw. in z-Richtung im Bereich der Auflageflächen 11 A und 11 B jeweils für die Einlegeeinrichtungen 9 bzw. 10 Ausnehmungen 11C, 11 D auf, in die die Einlegeeinrichtungen 9 und 10 über die entsprechend ausgeformten Einlegeteile 9D und 10D formschlüssig eingreifen, um im Betrieb eines Fahrzeuges eine Relativbewegung der Querblattfeder 1 in Fahrzeugquerrichtung bzw. in y-Richtung gegenüber dem Fahrzeugaufbau neben der kraftschlüssigen Verbindung mit der Lagervorrichtung 1 auch über einen zusätzlichen Formschluss zwischen der Querblattfeder 1 und der Lagervorrichtung 4 auf konstruktiv einfache Art und Weise zu vermeiden.

Die Ausnehmungen 11C und 11 D bzw. die Konturen der Ausnehmungen 11C und 11 D sind derart ausgeführt, dass im Anlagebereich der Lagervorrichtung 4 an der Querblattfeder 1 im Betrieb eine möglichst gleichmäßige Spannungsverteilung vorliegt, die die Lebensdauer der Querblattfeder 1 günstig beeinflusst. Die Kontur der Ausnehmungen 11C und 11 D entspricht jeweils im Wesentlichen einer speziellen kosinusförmigen Vertiefung in y-Richtung, womit eine möglichst gleichmäßige Spannungsverteilung im Lagerbereich der Querblattfeder 1 erreicht wird. Die Lageraußenschalen 6 und 7 sind jeweils mit Anlageflächen 12 zum Fahrzeugaufbau bzw. zu dem mit dem Fahrzeugaufbau wirkverbundenen Hilfsrahmen ausgebildet, um einen möglichst direkten Kraftfluss zwischen der Lagervorrichtung 4 und dem Fahrzeugaufbau zu gewährleisten. Abweichend hiervon besteht jedoch auch die Möglichkeit, dass die Lagerschalen 6 und 7 zumindest bereichsweise unterschiedlich ausgebildet sind, um die Lagervorrichtung 4 an vorhandene Bauräume anzupassen oder sogenannte Poka-Yoke-Anforderungen umzusetzen, die eine Falschmontage der Lagervorrichtung 4 wirkungsvoll verhindern.

Zusätzlich wird über den Formschluss zwischen der Querblattfeder 1 und der Lagervorrichtung 4 auch die Position der Lagervorrichtung 4 an der Querblattfeder 1 definiert, die für die Gesamtfunktion des Systems wesentlich ist.

Die Querblattfeder 1 ist vorliegend mit einem variablen Querschnitt ausgebildet. Um den Faseranteil im Querschnitt der Querblattfeder 1 möglichst konstant zu halten besteht die Möglichkeit, dass die Querblattfeder 1 im Montagebereich der Lagervorrichtungen 4 und 5 in Fahrzeuglängsrichtung jeweils mit einer im Vergleich zum übrigen Querschnitt leichten Verbreiterung ausgeführt ist. Alternativ hierzu besteht auch die Möglichkeit, dass die Querblattfeder 1 über die gesamte Länge mit einem konstanten Querschnitt ausgeführt ist.

Die Querblattfeder 1 ist im Bereich ihrer Oberfläche 11 zumindest im Anlagebereich mit den Lagervorrichtungen 4 und 5 mit einer speziellen Oberflächenbeschichtung und/oder Oberflächenbehandlung ausgeführt, um die Härte der Oberfläche 11 der Querblattfeder 1 gegenüber der übrigen Oberfläche 11 zu erhöhen und/oder im Bereich des Formschlusses zwischen der Querblattfeder 1 und der Lagervorrichtungen 4 und 5 den Reibbeiwert zur Erhöhung der Verbindungskräfte anzuheben. Zusätzlich besteht über eine spezielle Oberflächenbeschichtung und/oder Oberflächenbehandlung der Oberfläche 11 der Querblattfeder 1 die Möglichkeit, dass ein Fertigungsprozess für die Herstellung der Bereiche 1C und 1 D der Querblattfeder 1, beispielsweise der Entformungsvorgang der Querblattfeder 1 aus dem Werkzeug, erleichtert bzw. vereinfacht wird.

Als Oberflächenbeschichtung sind beispielsweise eine Klebeschicht, eine Lackschicht, ein Kunststoffmaterial sowie eine mit Nanopartikeln ausgeführte Kunststoffschicht denkbar. Während einer Oberflächenbehandlung wird die Oberfläche 11 der Querblattfeder 1 beispielsweise mit einer die Adhäsionseigenschaft der Oberfläche erhöhenden Flüssigkeiten vorbehandelt und anschließend werden die Härte oder den Reibbeiwert erhöhende Partikel auf die Oberfläche der Querblattfeder im genannten Bereich beispielsweise durch Aufdampfen aufgebracht.

Die Lagervorrichtung 4 wird durch die vier Schraubenelemente 8A bis 8D vorgespannt, wobei durch die form- und kraftschlüssige Verbindung zwischen der Lagervorrichtung 4 und der Querblattfeder 1 jeweils hohe Lagersteifigkeiten in z-Richtung und y-Richtung bei gleichzeitig geringer Torsionssteifigkeit um die Fahrzeuglängsachse zur Verfügung stellbar sind. Während der Montage der Lagervorrichtung 4 werden die Einlegeeinrichtungen 9 und 10 auf der Oberund Unterseite der Querblattfeder 1 aufgebracht und durch die in die Einlegeeinrichtungen 9 und 10 eingreifenden Bereiche 1C und 1 D der Querblattfeder 1 in Fahrzeugquerrichtung bzw. in y-Richtung auf der Querblattfeder 1 zentriert, wodurch eine genaue Fixierung der Lagervorrichtung 4 auf der Querblattfeder 1 gewährleistet ist.

Der Drehpunkt der beiden Einlegeeinrichtungen 9 und 10 liegt in montiertem Zustand der Lagervorrichtungen 4 und 5 im Wesentlichen auf der neutralen Faser der Querblattfeder 1, womit Verformungen im Bereich der Einlegeeinrichtungen 9 und 10 vorteilhafterweise im Wesentlichen gleich groß sind. Die in Fahrzeugquerrichtung bevorzugt kosinusförmigen Ausnehmungen 11C und 11 D der Querblattfeder 1 sind zur formschlüssigen Verbindung der Lagervorrichtung 4 mit der Querblattfeder 1 vorgesehen, wobei die kosinusförmige Ausgestaltung bzw. der kosinusförmige Übergang zwischen der Oberfläche 11 der Querblattfeder 1 außerhalb der Ausnehmungen 11C und 11 D und der Auflageflächen 11 A und 11B im Bereich der Ausnehmungen 11C und 11 D einen möglichst sanften Übergang im Verlauf der einzelnen Fasern der vorliegend aus Verbundmaterial hergestellten Querblattfeder 1 gewährleistet. Der sanfte Übergang im Faserverlauf der Querblattfeder 1 verhindert auf einfache Art und Weise eine Beeinträchtigung der Lebensdauer der Querblattfeder 1.

Die Lageraußenschalen 6 und 7 sind bei dem in Fig. 2 bis Fig. 5 dargestellten Ausführungsbeispiel der Lagervorrichtung 4 als Eisengussbauteile ausgeführt, die in montiertem Zustand zwei Trennebenen aufweisen.

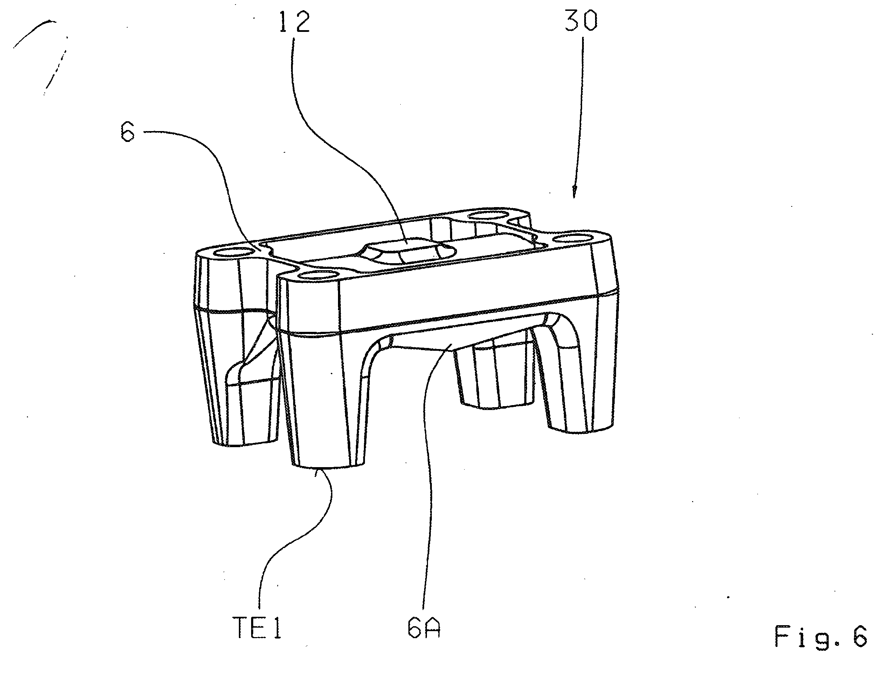

Eine hierzu alternative Ausführungsform der Lageraußenschalen 6 und 7 zeigt Fig. 6, welche im Querschnitt eine im Wesentlichen U-förmige Ausgestaltung aufweist. Die Lageraußenschale 6 bzw. 7 gemäß Fig. 6 ist ebenfalls als Eisengussbauteil ausgeführt und grenzt im Bereich einer Trennebene an die jeweils andere Lageraußenschale 7 bzw. 6 an. Die obere und untere Seite der Lageraußenschalen 6 und 7 sind somit jeweils während eines Arbeitsganges bearbeitbar.

In Abhängigkeit des jeweils vorliegenden Anwendungsfalles besteht auch die Möglichkeit, dass die Lageraußenschalen aus Stahl, Aluminium oder einem anderen geeigneten Material hergestellt sind. Zudem können die Lageraußenschalen auch als Kaltfließpressteil ausgeführt sein.

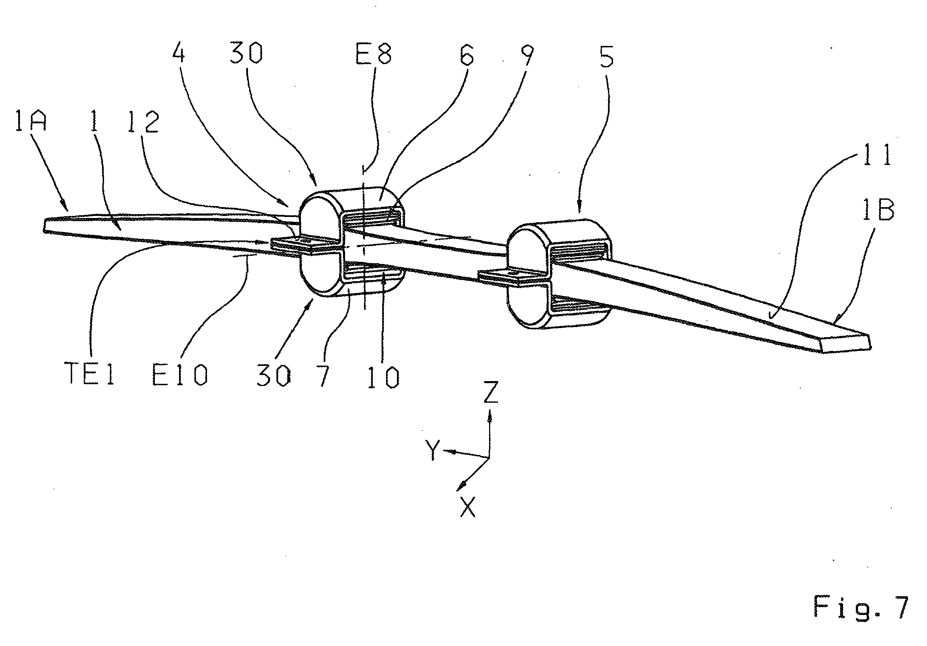

Fig. 7 zeigt eine Fig. 2 entsprechende Darstellung der Querblattfeder 1, welche über eine zweite Ausführungsform der Lagervorrichtungen 4 und 5 mit dem Fahrzeugaufbau verbunden ist. Die Lagervorrichtungen 4 und 5 sind grundsätzlich gleich aufgebaut, weshalb in der nachfolgenden Beschreibung wiederum im Wesentlichen lediglich auf die Lagervorrichtung 4 Bezug genommen wird.

Die Lageraußenschalen 6 und 7 sind als Blechschalen ausgebildet, die mit dem Hilfsrahmen oder direkt mit dem Fahrzeugaufbau verbindbar sind. Abweichend hierzu können die Lageraußenschalen auch als Gussteile oder als Kaltmassivumformteile ausgeführt sein.

Zur Reduktion der Herstellkosten sind die Lageraußenschalen 6 und 7 symmetrisch gestaltet. In vorbeschriebener Art und Weise umfassen die Lageraußenschalen 6 und 7 die Einlegeeinrichtungen 9 und 10, die jeweils mehrteilig aufgebaut sind und ein zumindest bereichsweise elastisch ausgeführtes Element umfassen, was in den Schnittdarstellungen 8 bis 10 bzw. 11 und 12 jeweils näher gezeigt ist.

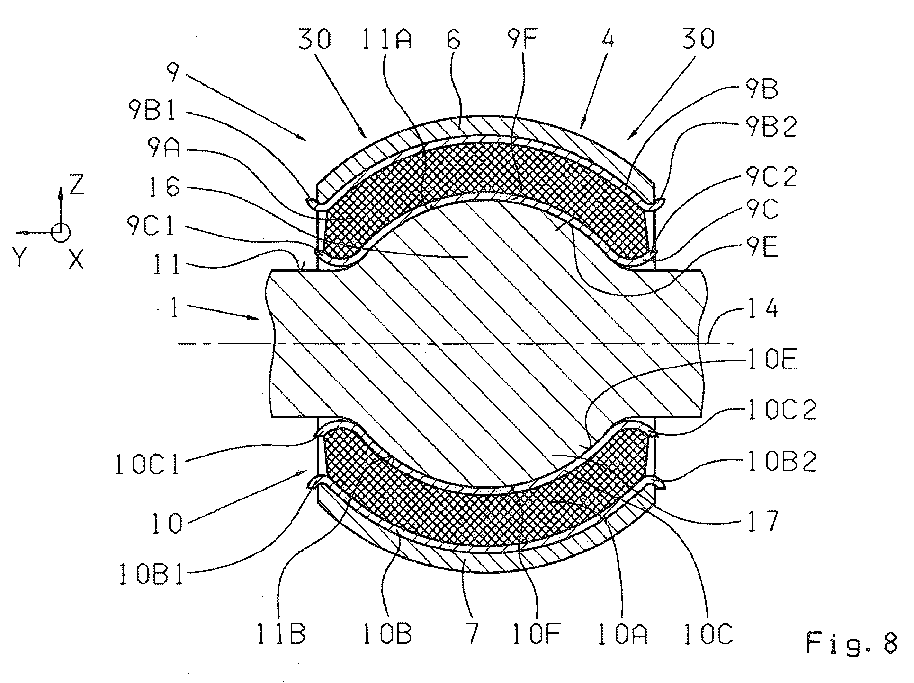

Bei der in Fig. 8 bis Fig. 10 dargestellten nicht erfindungsgemäßen Querblattfeder 1 weist diese in den Anlagebereichen der Lagervorrichtung 4 an der Querblattfeder 1 jeweils Erhöhungen 16, 17 auf, auf die die Einlegeeinrichtungen 9 und 10 mit den Lagenelementen 9A bis 9C bzw. 10A bis 10C aufgelegt sind. Die Erhöhungen 16 und 17 übernehmen im Wesentlichen die Funktionalität der Einlegeteile 9D bzw. 10D der Einlegeeinrichtungen 9 und 10 gemäß Fig. 2 bis Fig. 5.

Um die Lagervorrichtung 4 mit der gewünschten Lagersteifigkeit zur Verfügung stellen zu können, sind die Einlegeeinrichtungen 9 und 10 abweichend von der in Fig. 8 bis Fig. 10 dargestellten Ausführungsform mit zusätzlichen die Steifigkeit erhöhenden und als Einlegebleche ausgebildeten Lagenelementen oder im Bereich des Lageelementes 9A bzw. 10A mit Ausnehmungen ausführbar.

Die Lagenelemente 9C bzw. 10C der Einlegeeinrichtungen 9 und 10 sind bei dem in Fig. 8 bis Fig. 10 dargestellten Ausführungsbeispiel zwischen den gummielastischen Lagenelementen 9A bzw. 10A und der Querblattfeder 1 angeordnet und sind in Abhängigkeit des jeweils vorliegenden Anwendungsfalles aus Metall, Kunststoffen, verstärkten Kunststoffen oder faserverstärkten Kunststoffen herstellbar. Die Lagenelemente 9C und 10C sind vorliegend durch Vulkanisation jeweils mit den gummielastischen Lagenelementen 9A und 10A verbunden, wobei in Abhängigkeit des jeweils vorliegenden Anwendungsfalles auch eines der Lagenelemente 9B, 9C bzw. 10B, 10C entfallen kann.

Das direkt auf der Querblattfeder 1 angeordnete Lagenelement ist derart auszuführen, dass die Oberfläche 11 der Querblattfeder 1 im Betrieb nicht durch das Lagenelement beschädigt wird. Aus diesem Grund sind die Lagenelemente 9B, 9C und 10B, 10C in ihren Endbereichen 9B1, 9B2, 9C1, 9C2, 10B1, 10B2, 10C1, 10C2 mit abgerundeten und in Bezug auf die Oberfläche 11 der Querblattfeder 1 nach außen gebogenen Enden ausgebildet, wobei die gekrümmten bzw. aufgebogenen Enden 9B1, 9B2 und 10B1, 10B2 der Lagenelemente 9B und 10B eine Zentrier- bzw. Positionierfunktion der Einlegeeinrichtungen 9 und 10 gegenüber den Lageraußenschalen 6 und 7 zur Verfügung stellen und ein Verrutschen der Einlegeeinrichtungen 9 und 10 gegenüber den Lageraußenschalen 6 und 7 während extremer Lagerbelastungen unterbinden bzw. verhindern.

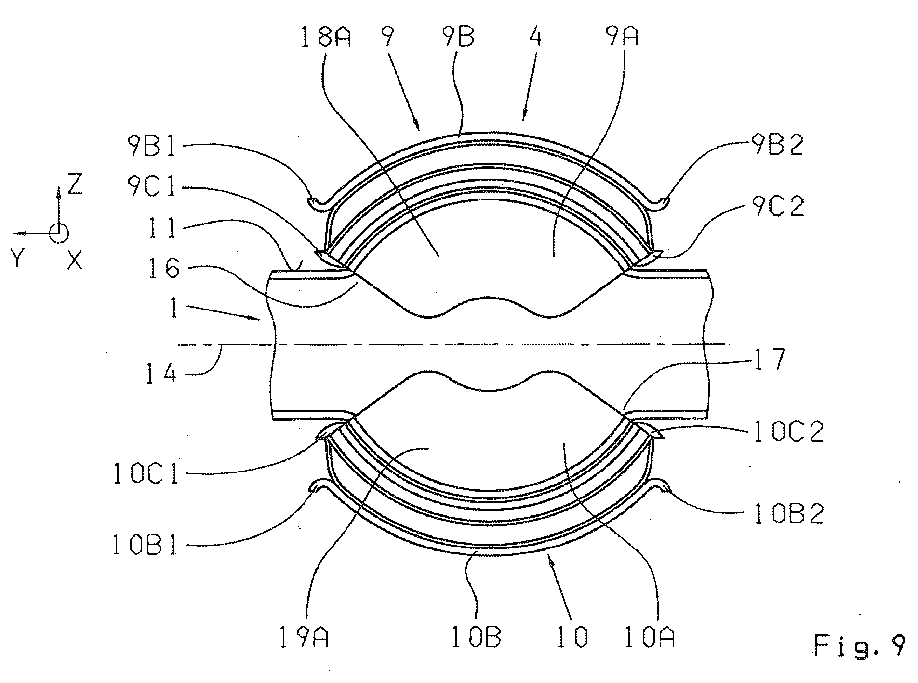

In Fig. 9 ist eine Seitenansicht der Querblattfeder 1 und der Lagervorrichtung 4 ohne die Lageraußenschalen 6 und 7 gezeigt. Aus der Darstellung gemäß Fig. 9 geht hervor, dass die gummielastischen Lagenelemente 9A und 10A jeweils mit seitlich angeordneten elastischen Anschlagbereichen 18, 19 ausgebildet sind, die in montiertem Zustand der Lagervorrichtung 4 zwischen den sich in Fahrzeughochrichtung z erstreckenden Seitenflächen der Querblattfeder 1 und den Lageraußenschalen 6 und 7 angeordnet sind. Über die Anschlagbereiche 18 und 19 sind die Einlegeeinrichtungen 9 und 10 in Fahrzeuglängsrichtung x an der Querblattfeder 1 positioniert und bieten eine weiche Abstützung der Querblattfeder 1 in x-Richtung bzw. in Fahrzeuglängsrichtung an den Lageraußenschalen 6 und 7.

Die Anschlagbereiche 18 und 19 sind in der der Querblattfeder 1 zugewandten Anlagebereichen und/oder in den den Lageraußenschalen zugewandten Anlagebereichen mit wenigstens annähernd in Fahrzeuglängsrichtung orientierten Vorsprüngen und/oder Ausnehmungen ausführbar, um unterschiedliche Lagersteifigkeiten der Lagervorrichtung 4 über der Lagerverschiebung darstellen zu können. Zudem sind die Anschlagbereiche der Einlegeeinrichtungen 9 und 10 in Bezug auf die Fahrzeuglängsrichtung vorne und hinten unterschiedlich ausführbar, um entsprechend unterschiedliche Lagercharakteristiken zur Verfügung stellen zu können.

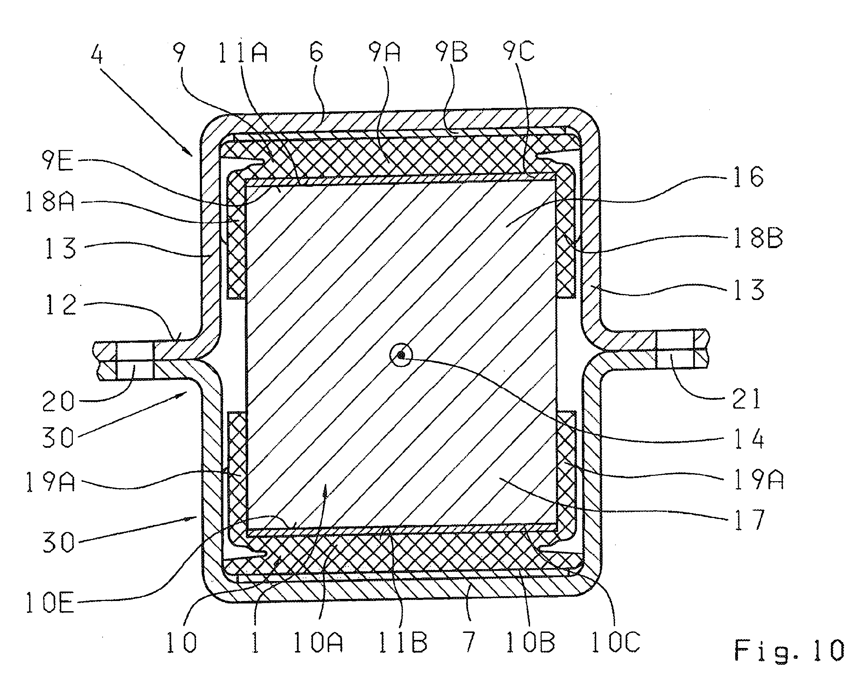

In Fig. 10 sind die in Fahrzeuglängsrichtung beidseitig der Querblattfeder 1 vorgesehenen Anschlagbereiche 18A, 18B und 19A, 19B der Einlegeeinrichtungen 9 und 10 dargestellt. Die Lageraußenschalen 6 und 7 sind im Bereich von Bohrungen 20, 21 über die in Fig. 10 nicht näher dargestellte Schraubeneinrichtung 8 wenigstens über zwei Schraubenelemente miteinander verbunden und auch fahrzeugaufbauseitig bzw. am Hilfsrahmen befestigbar.

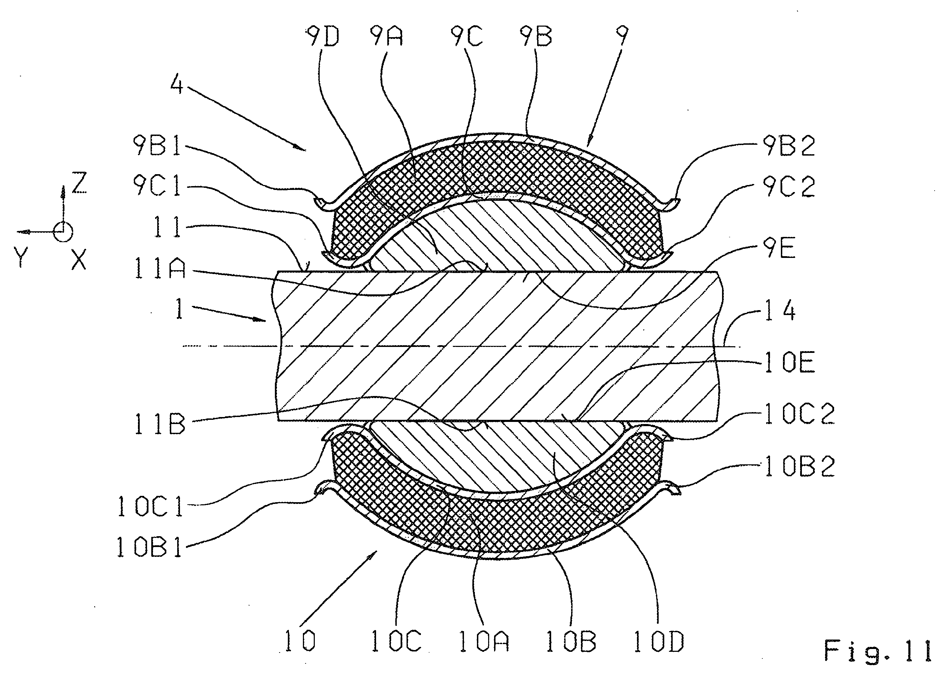

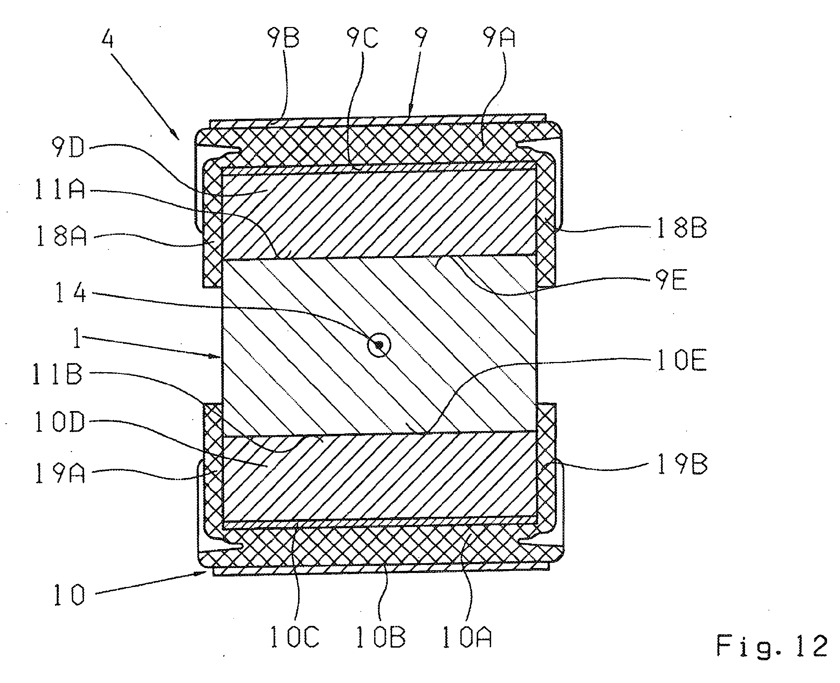

Fig. 11 und Fig. 12 zeigen eine weitere nicht erfindungsgemäße Querblattfeder 1 und Lagervorrichtung 4 bzw. 5, bei welcher die Querblattfeder 1 im Anlagebereich der Lagervorrichtung 4 ohne die Erhöhungen 16 und 17 der Querblattfeder 1 gemäß Fig. 8 bis Fig. 10 ausgebildet ist und die Einlegeeinrichtungen 9 und 10 wiederum mit Einlegeteilen 9D und 10D ausgeführt sind. Die Einlegeteile 9D und 10D übertragen die Kraft von der Querblattfeder 1 auf die mehrteilig aufgebauten und bereichsweise gummielastisch ausgebildeten Einlegeeinrichtungen 9 und 10, die die wirkenden Kräfte wiederum in die Lageraußenschalen 6 und 7 einleiten.

Die Einlegeteile 9D und 10D sind bei der Lagervorrichtung 4 gemäß Fig. 11 und Fig. 12 jeweils zwischen der Oberfläche 11 der Querblattfeder und den Lagenelementen 9C bzw. 10C angeordnet. Der weitere Aufbau der Einlegeeinrichtungen 9 und 10 entspricht im Wesentlichen dem Aufbau der Einlegeeinrichtungen 9 und 10 gemäß Fig. 8 bis Fig. 10.

Die Einlegeteile 9D und 10D der Einlegeeinrichtungen 9 und 10 können in Abhängigkeit des jeweils vorliegenden Anwendungsfalles beispielsweise durch Vulkanisation mit dem gummielastischen Lagenelement 9A bzw. 1.0A verbunden sein, um eine Montage der Lagervorrichtung 4 zu vereinfachen und gegebenenfalls die Einlegeteile 9D und 10D mit gummielastischen Schutzschichten zu versehen, die auf einfache Art und Weise im Betrieb eines Fahrzeuges Beschädigungen der Oberfläche 11 der Querblattfeder 1 verhindern bzw. reduzieren.

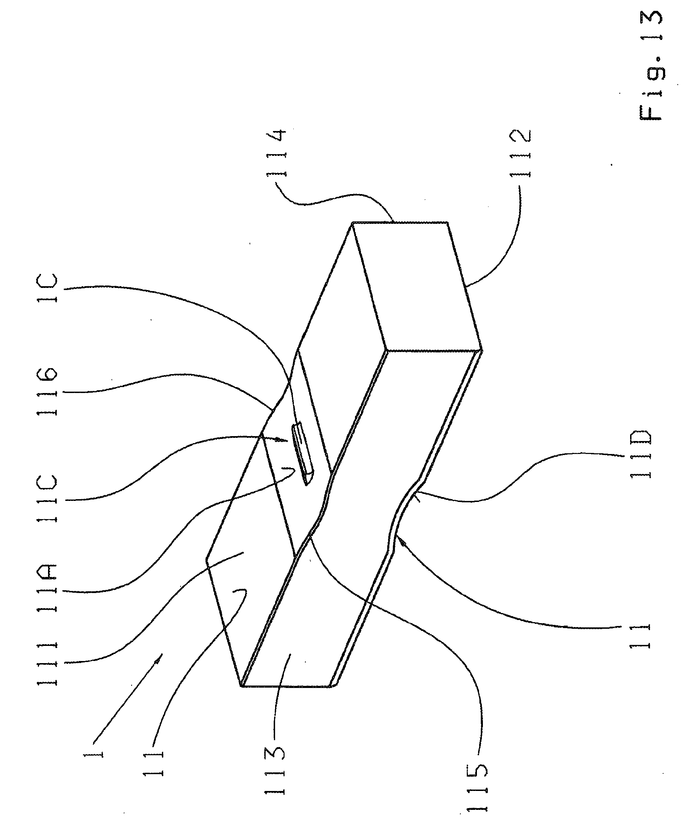

Fig. 13 bis Fig. 21 zeigen verschiedene erfindungsgemäße Ausführungsformen und nicht erfindungsgemäße Beispiele der den Formschluss zwischen der Querblattfeder 1 und der Lagervorrichtung 4 herstellenden Bereiche der Querblattfeder 1. Die in Fig. 13 bis Fig. 21 dargestellten Ausführungsformen und Beispiele unterscheiden sich jeweils lediglich in Teilbereichen, weshalb in der nachfolgenden Beschreibung jeweils lediglich auf die Unterschiede zwischen den einzelnen Ausführungsformen und Beispielen eingegangen wird und bezüglich der weiteren Funktionalität der Ausnehmungen auf die Beschreibung zu Fig. 13 verwiesen wird.

Bei der in Fig. 13 dargestellten Ausführungsform ist die Querblattfeder 1 in Fahrzeughochrichtung bzw. in z-Richtung verstärkt komprimiert und mit der gleichen Breite wie im übrigen Querschnittbereich der Querblattfeder 1 ausgebildet. Dadurch liegt im komprimierten Bereich bzw. im Bereich der Ausnehmungen 11C und 11 D der Querblattfeder 1 ein erhöhter Faseranteil vor. Aufgrund der Ausnehmungen 11C und 11 D sind im Bereich der Lagervorrichtung 4 wirkende erhöhte Querkräfte sicher von der Querblattfeder 1 in die Lagervorrichtung 4 einleitbar. Der Übergang zwischen den Ausnehmungen 11C und 11 D und der angrenzenden Oberfläche 11 der Querblattfeder 1 ist vorliegend über eine Kosinuskontur mit tangentialen Ein- und Ausläufen derart span-nungsoptimiert ausgelegt, dass im Bereich der Ausnehmungen 11C und 11 D im Betrieb lediglich geringe Spannungsüberhöhungen auftreten.

Die Bereiche 1C und 1 D der Querblattfeder 1 übernehmen im Wesentlichen lediglich die Aufgabe der Zentrierung der Lagervorrichtung 4 in Längsund Querrichtung auf der Querblattfeder 1, während die Bereiche 1C und 1 D an der Kraftweiterleitung zwischen der Lagervorrichtung 4 und der Querblattfeder 1 nur in geringem Umfang oder überhaupt nicht beteiligt sind. Die Formen der Bereiche 1C und 1 D sind jeweils mit sanften Übergängen zu den Ausnehmungen 11C und 11 D ausgeführt, wobei sich in den Bereichen 1C und 1 D im Wesentlichen Harz während der Herstellung der Querblattfeder ansammelt. Aufgrund dieser Vorgehensweise wird eine abrupte Faserumlenkung im Querschnitt der Querblattfeder 1 vermieden.

Die Ausnehmungen 11C und 11 D sind in montiertem Zustand der Querblattfeder 1 in Fahrzeuglängsrichtung x jeweils von zwischen einer Oberseite 111 und einer Unterseite 112 und Seitenflächen 113, 114 der Querblattfeder 1 gebildeten Randbereichen 115 und 116 der Oberseite 111 und der Unterseite 112 begrenzt, in deren Bereich die Dicke der Querblattfeder 1 vorzugsweise im Wesentlichen der Dicke außerhalb der Ausnehmungen 11C und 11 D entspricht. Durch diese Kontur entsteht wiederum nur eine geringe Spannungsüberhöhung im Übergang zwischen der Lagerstelle der Querblattfeder 1 und der restlichen die Lagerstelle umgebenden Oberfläche 11 der Querblattfeder 1. Die Breite der Querblattfeder 1 bleibt im Wesentlichen gleich, wodurch im Bereich der Ausnehmungen 11C und 11 D im Querblattfederquerschnitt jeweils ein erhöhter Faseranteil vorliegt.

Durch diese jeweils eine Einbuchtung darstellenden Ausnehmungen 11C und 11 D können erhöhte Quer- und Längskräfte von der Lagervorrichtung 4 gut in die Querblattfeder 1 eingeleitet werden. Über die Ausnehmungen 11C und 11 D werden die Einlegeeinrichtungen 9, 10 während der Montage der Lagervorrichtung 4 sowohl in Fahrzeuglängsrichtung und Fahrzeugquerrichtung auf der Querblattfeder 1 zentriert.

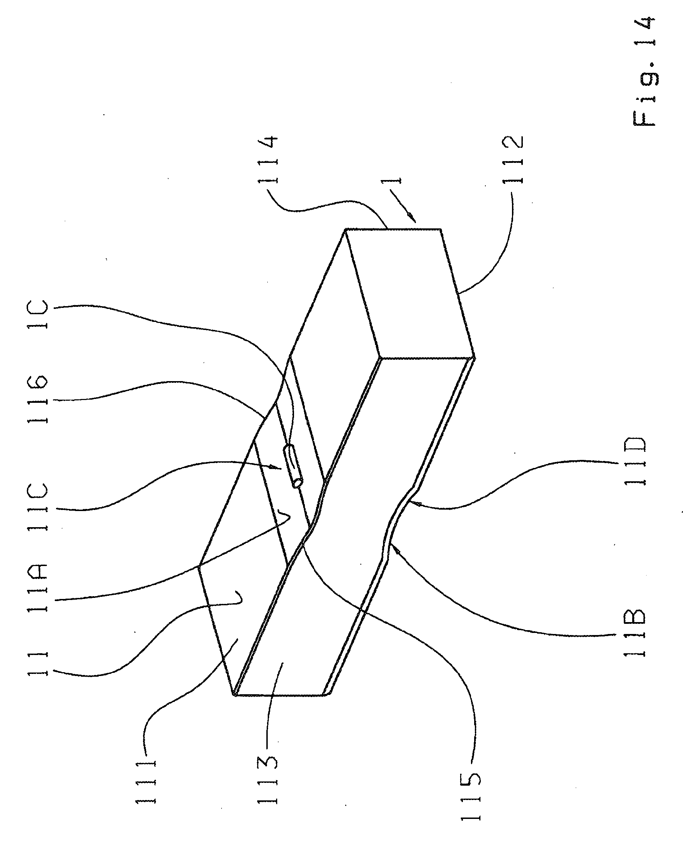

Bei der in Fig. 14 dargestellten nicht erfindungsgemäßen Querblattfeder 1 sind die Bereiche 1C und 1 D mit weniger sanften Übergängen zu den Ausnehmungen 11C und 11 D ausgeführt und weisen im Wesentlichen eine wenigstens annähernd halbzylindrische Außenform auf. Die halbzylindrische Außenform bietet im Vergleich zu der in Fig. 13 dargestellten Form der Bereiche 1C und 1 D eine vereinfachte Herstellbarkeit des Werkzeuges, welches zur Fertigung der Querblattfeder 1 verwendet wird. Die Bereiche 1C und 1 D des in Fig. 14 dargestellten Ausführungsbeispieles der Querblattfeder 1 übernehmen im Wesentlichen wiederum lediglich die Zentrierung der Lagervorrichtung 4 in Längs- und Querrichtung an der Querblattfeder 1 und sind an der Kraftübertragung zwischen der Lagervorrichtung 4 und der Querblattfeder 1 nur geringfügig bzw. überhaupt nicht beteiligt. Die Formen der Bereiche 1C und 1 D sind wiederum derart, dass die Fasern der Querblattfeder 1 keine wesentliche Umlenkung aufweisen und dass eine Festigkeit der Querblattfeder 1 der Festigkeit von Querblattfedern, welche ohne die Bereiche 1C und 1 D ausgeführt sind, entspricht.

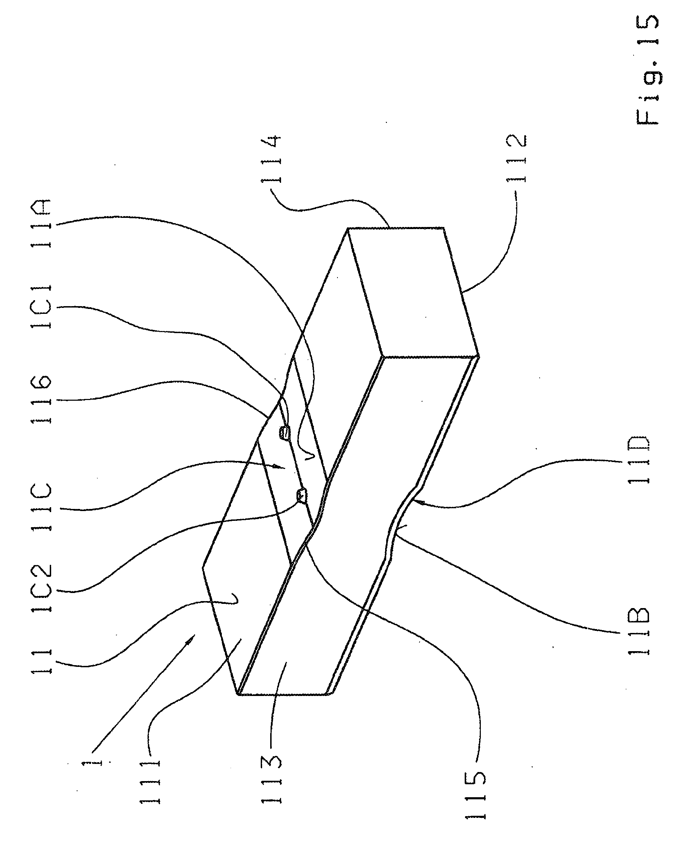

Die in Fig. 15 gezeigten Bereiche 1C und 1D sind mit zwei im Bereich der Außenseiten der Querblattfeder angeordneten wenigstens annähernd kegelstumpfartig ausgeführten Nasen ausgestaltet, über die die Zentrierung der Lagervorrichtung 4 auf der Querblattfeder 1 realisiert ist. Die Bereiche 1C und 1 D sind wiederum im Wesentlichen Harzansammlungen, um abrupte Umlenkungen der Fasern im Bereich der Ausnehmungen bzw. der Bereiche 1C und 1 D zu vermeiden.

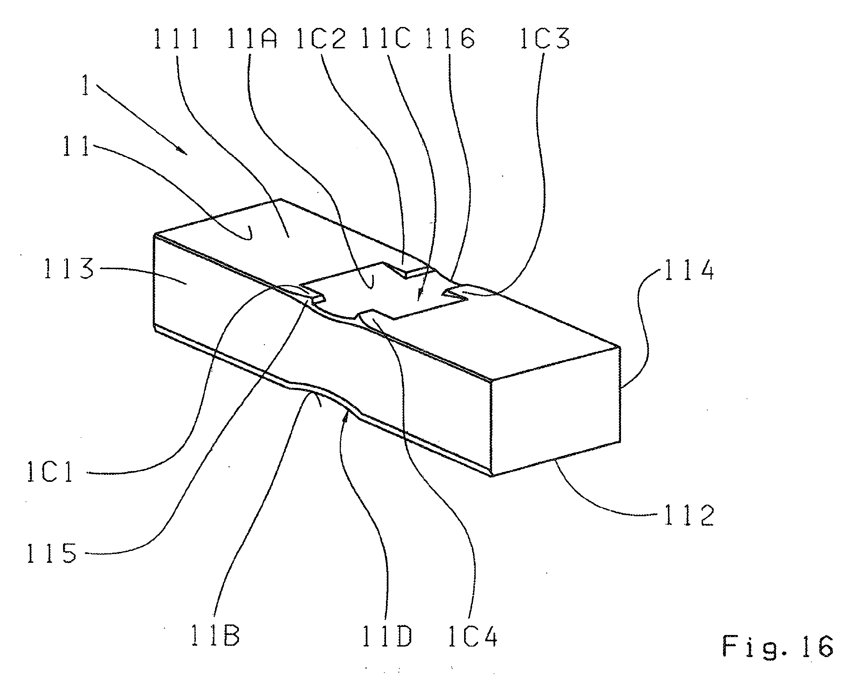

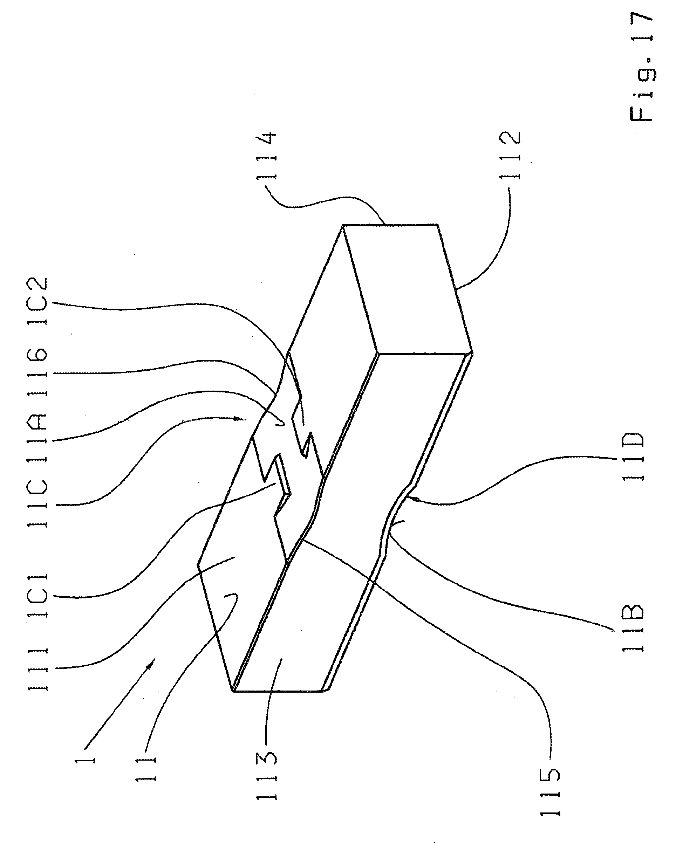

Die Bereiche 1C und 1 D sind bei dem weiteren Ausführungsbeispiel der Querblattfeder 1 gemäß Fig. 16 als im Bereich der Außenseiten der Querblattfeder 1 angeordnete Nasen 1C1 bis 1 C4 ausgebildet, wobei die Übergänge zwischen den Ausnehmungen 11C, 11 D und den Nasen 1 C1 bis 1 C4 wiederum spannungsoptimiert gestaltet ist. Bei dem Ausführungsbeispiel der Querblattfeder 1 gemäß Fig. 17 sind die Bereiche 1C und 1 D mit im mittleren Bereich der Querblattfeder 1 angeordneten Nasen 1 C1 und 1 C2 abgebildet.

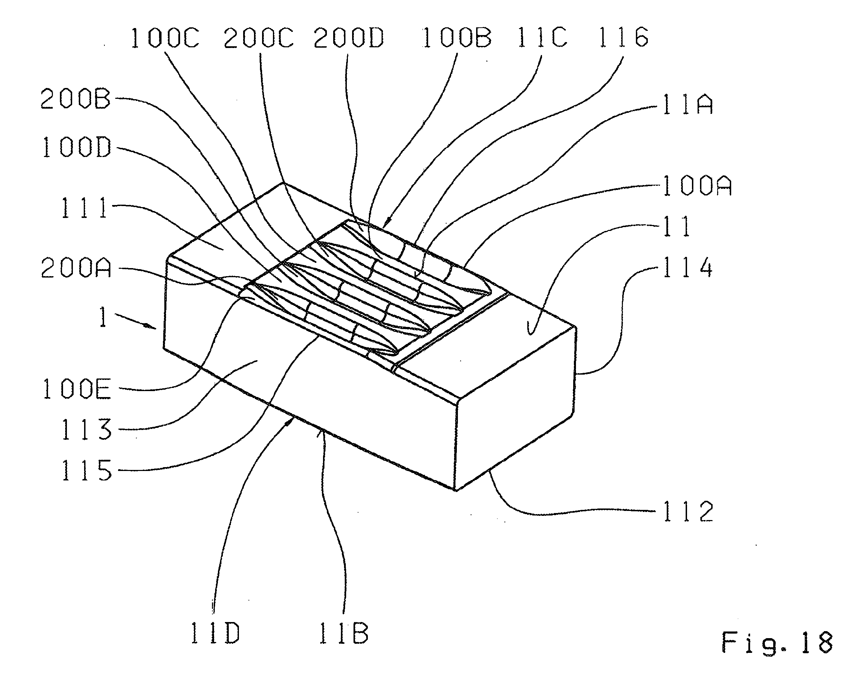

Die in Fig. 18 dargestellte weitere nicht erfindungsgemäße Querblattfeder 1 ist im Bereich der Ausnehmungen 11C und 11 D der Querblattfeder 1 mit sich in komprimiertem Zustand der Querblattfeder 1 in Fahrzeugquerrichtung erstreckenden und alternierend angeordneten Rippen 100A bis 100E und Rillen 200A bis 200D ausgestaltet, welchen die Funktion der Bereiche 1C und 1 D zugrunde liegt. Die Anzahl der Rippen 100A bis 100E wird abhängig von der Breite der Querblattfeder 1 und der Tiefe der Rillen 200A bis 200D ausgewählt, wobei die seitlichen Rippen 100A und 100E bedarfsweise auch weggelassen werden können. Im Bereich der Rillen 200A bis 200D wird der Faseranteil der Querblattfeder komprimiert bzw. teilweise auf die Rippen 100A bis 100E umverlagert, wobei die Übergänge zwischen den Rippen 100A bis 100E und den Rillen 200A bis 200D sowie zwischen der verbleibenden Oberfläche 11 der Querblattfeder 1 spannungsoptimiert ausgelegt sind, um nur geringe Spannungsüberhöhungen in den Übergängen zu erzeugen. Die Tiefe der Rillen 200A und 200D variiert in Fahrzeugquerrichtung sowie in Fahrzeuglängsrichtung und weist in einem mittleren Bereich im Wesentlichen jeweils sein Maximum und in Fahrzeugquerrichtung gegenüberliegenden Randbereichen jeweils sein Minimum auf.

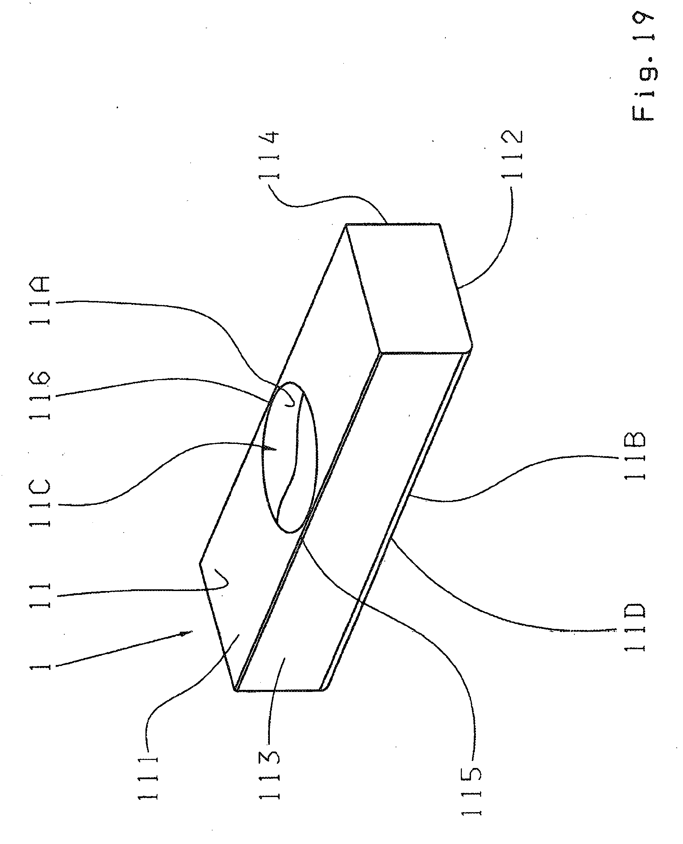

Die in Fig. 19 dargestellte Ausführungsform der Querblattfeder 1 ist mit Ausnehmungen 11C und 11 D ausgebildet, die jeweils eine rotierte Kosinuskontur aufweisen und jeweils in die Oberfläche 11 der Querblattfeder 1 eingeprägt sind. Die Ausnehmungen 11C und 11 D sind in montiertem Zustand der Querblattfeder 1 in Fahrzeuglängsrichtung x ebenfalls wie die vorbeschriebenen Ausführungsbeispiele jeweils von zwischen der Oberseite 111 und der Unterseite 112 und Seitenflächen 113, 114 der Querblattfeder 1 gebildeten Randbereichen 115 und 116 der Oberseite 111 und der Unterseite 112 begrenzt, in deren Bereich die Dicke der Querblattfeder 1 vorzugsweise im Wesentlichen der Dicke außerhalb der Ausnehmungen 11C und 11 D entspricht.

In Abhängigkeit des jeweils vorliegenden Anwendungsfalles sind für die Gestaltung der Ausnehmungen der Querblattfeder auch andere geeignete rotationssymmetrische Formen, wie beispielsweise ein Kegelstumpf, eine Halbkugel oder dergleichen, mit jeweils abgerundeten Übergängen zur restlichen Oberfläche 11 der Querblattfeder 1 vorsehbar.

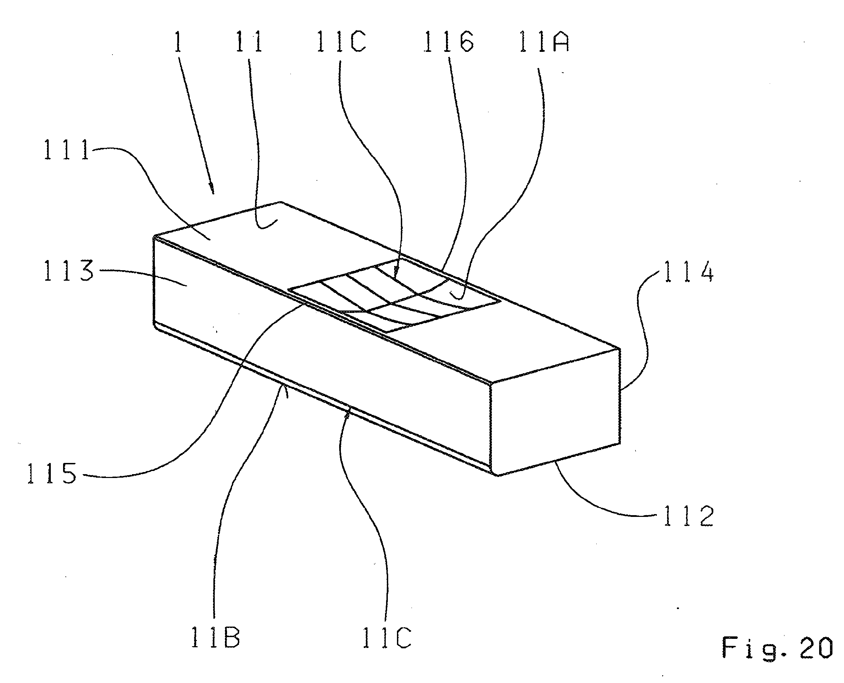

Bei der Ausführungsform der Querblattfeder 1 gemäß Fig. 20 sind die Ausnehmungen 11C und 11 D der Querblattfeder 1 mit einer abgerundeten Rechteckform, die eine kissenähnliche Form aufweist, in die Querblattfeder eingeprägt. Die Kontur kann beispielsweise durch zwei rechtwinklig überlagerte Kosinuskonturen hergestellt werden, die lediglich eine geringe Spannungsüberhöhung im Bereich zwischen der Lagerstelle der Lagervorrichtung 4 einer Querblattfeder 1 und der restlichen Oberfläche 11 der Querblattfeder 1 gewährleistet. Grundsätzlich besteht die Möglichkeit, die Querblattfeder auch im Bereich der Ausnehmungen 11C und 11 D mit der gleichen Breite wie im übrigen Verlauf der Querblattfeder 1 auszuführen, wodurch im Bereich der Ausnehmungen 11C und 11 D im Querblattfederquerschnitt ein erhöhter Faseranteil vorliegt. Die Ausnehmungen 11C und 11 D sind in montiertem Zustand der Querblattfeder 1 in Fahrzeuglängsrichtung x jeweils von zwischen einer Oberseite 111 und einer Unterseite 112 und Seitenflächen 113, 114 der Querblattfeder 1 gebildeten Randbereichen 115 und 116 der Oberseite 111 und der Unterseite 112 begrenzt, in deren Bereich die Dicke der Querblattfeder 1 vorzugsweise im Wesentlichen der Dicke außerhalb der Ausnehmungen 11C und 11 D entspricht.

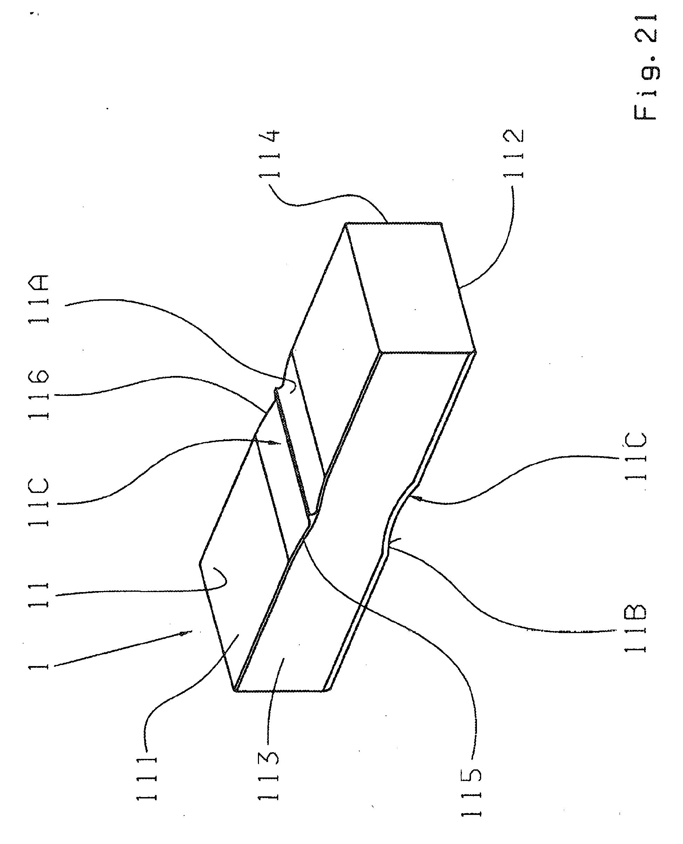

Die in Fig. 21 dargestellte Ausführungsform der Querblattfeder 1 weist jeweils im Bereich der Ausnehmungen 11C und 11 D einen sich über die gesamte Breite der Querblattfeder 1 erstreckenden Bereich 1C bzw. 1 D auf, wobei die Querblattfeder 1 in Fahrzeughochrichtung bzw. in z-Richtung während der Herstellung verstärkt komprimiert wird. Dies führt wiederum zu einem erhöhten Faseranteil im Anlagebereich der Lagervorrichtung 4. Den Bereichen 1C und 1 D liegt wiederum im Wesentlichen die Funktionalität der Zentrierung der Lagervorrichtung 4 in Längsrichtung auf der Querblattfeder 1 zugrunde. Werden die Bereiche 1C und 1 D ausgehend von einem mittleren Bereich der Querblattfeder 1 mit in Fahrzeuglängsrichtung jeweils in Richtung der Außenseiten der Querblattfeder 1 leicht ansteigend ausgeführt, ist auch eine Zentrierung der Lagervorrichtung 4 in Querrichtung auf der Querblattfeder 1 möglich.

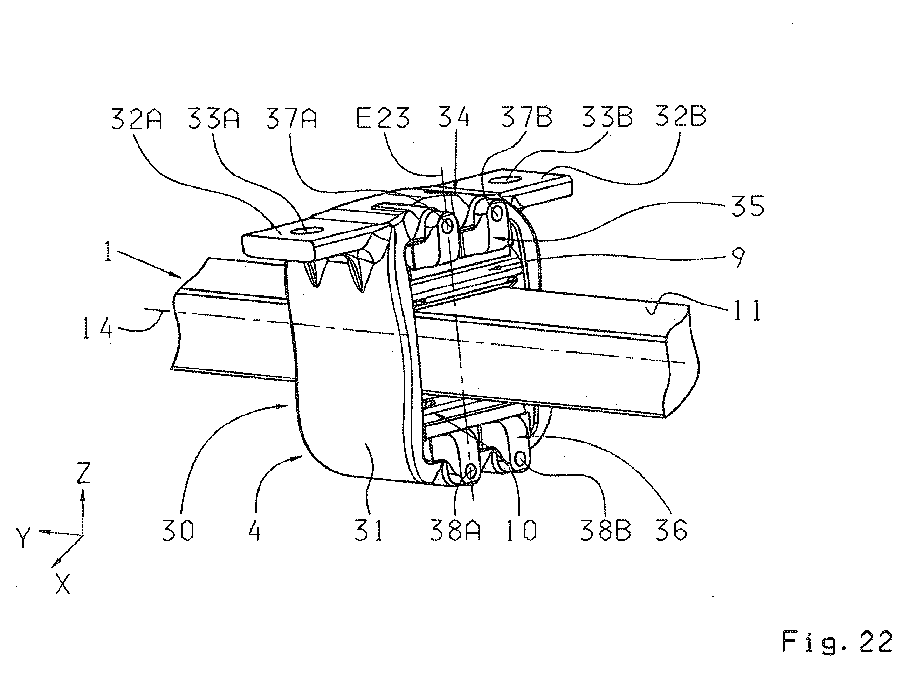

Fig. 22 zeigt eine dreidimensionale Teildarstellung der Querblattfeder 1 mit einem weiteren Ausführungsbeispiel der Lagervorrichtung 4 von welchem in Fig. 3 eine Längsschnittansicht entlang einer in Fig. 22 lediglich durch eine strichpunktierte Linie grafisch näher dargestellte Schnittebene E23 gezeigt ist. Die Schnittebene E23 erstreckt sich in Fahrzeughochrichtung z und in Fahrzeugquerrichtung y und entspricht einer sogenannten yz-Schnittebene.

Die Lagervorrichtung 4 weist eine Lageraußenschaleneinrichtung 30 mit einem einteiligen Lagerringelement 31 auf, das als ein geschlossenes Metallteil ausgebildet ist. Damit sind bei gleichzeitig geringem Bauraumbedarf hohe Kräfte und Momente zwischen der Querblattfeder 1 und dem Fahrzeugaufbau bzw. einem Hilfsrahmen übertragbar. Das Lagerringelement 31 ist über zwei in Bezug auf die Fahrzeughochachse z an der Oberseite des Lagerringelementes 31 angeordnete und vorliegend als Laschen ausgebildete Verbindungseinrichtungen 32A, 32B fahrzeugaufbauseitig im Bereich von Schrauben 33A, 33B verschraubbar und fest mit dem Fahrzeugaufbau oder einem damit gekoppelten Hilfsrahmen verbindbar. Alternativ hierzu besteht jedoch auch die Möglichkeit, die Lagervorrichtung 4 über andere geeignete Befestigungsmaßnahmen fahrzeugaufbauseitig festzulegen.

Zwischen den Laschen 32A, 32B ist das Lagerringelement mit einem Zentrierbereich 34 ausgeführt, der in montiertem Zustand der Lagervorrichtung 4 mit einem fahrzeugaufbauseitigen Zentrierbereich zusammenwirkt und zur Ausrichtung der Lagervorrichtung 4 gegenüber dem Fahrzeugaufbau in Fahrzeuglängs- und Fahrzeugquerrichtung x und y dient. Der Zentrierbereich 34 ist vorliegend als eine in Fahrzeugquerrichtung x verlaufende und mit abgerundeter Kontur ausgestaltete sowie in Fahrzeughochrichtung z sich abhebende Erhöhung an der Außenseite des Lagerringelementes 31 ausgebildet, die in eine entsprechende fahrzeugaufbauseitige Ausnehmung eingreift.

Die Querblattfeder 1 ist von dem Lagerringelement 31 vollständig umgriffen, wobei jeweils zwischen einer in Bezug auf die Fahrzeughochrichtung z positionierte Oberseite der Querblattfeder 1 und der Unterseite der Querblattfeder 1 jeweils Einlegeeinrichtungen 9, 10 sowie ein oberes keilförmiges Spannelement 35 und ein unteres Spannelement 36 angeordnet sind. Die Spannelemente 35 und 36 sind jeweils zwischen dem Lagerringelement 31 und den Einlegeeinrichtungen 9 bzw. 10 eingeschoben, um eine vertikale Vorspannung der zwischen dem Lagerringelement 31 und der Querblattfeder 1 angeordneten Einlegeeinrichtungen 9 und 10 zur Verfügung zu stellen, und in Abhängigkeit des jeweils vorliegenden Anwendungsfalles aus Metall, Faserverbund- oder reinen Kunststoffwerkstoffen herstellbar.

Das obere Spannelement 35 wird im Bereich von Bohrungen 37A, 37B mit dem Lagerringelement 31 verschraubt, während das untere Spannelement 36 im Bereich von Bohrungen 38A, 38B mit dem Lagerringelement 31 verschraubt ist. Alternativ hierzu besteht jedoch auch die Möglichkeit, die Spannelemente 35, 36 jeweils nur über eine Verschraubung mit dem Lagerringelement 31 zu verbinden oder andere geeignete Verbindungsarten vorzusehen.

Die von den Spannelementen 35 und 36 in Abhängigkeit des Einschiebeweges der Spannelemente 35 und 36 in das Lagerringelement 31 erzeugte Vorspannkraft wird im Bereich einer Schulter 40 des Lagerringelementes 31 abgestützt.

Die Spannelemente 35 und 36 sind bei dem vorliegenden Ausführungsbespiel jeweils als separate Bauteile ausgebildet. Bei weiteren vorteilhaften Ausführungsformen besteht zur Vereinfachung einer Montage die Möglichkeit, die Spannelemente mit seitlich die Querblattfeder 1 umgreifenden dünnen Stegen zu verbinden, womit die Spannelemente als einfach auf die Querblattfeder aufschiebbare bzw. montierbare Hohlringkörper ausgebildet sind. Die Spannelemente sind dann im Bereich der Stege elastisch verformbar ausgeführt, um während dem Aufbringen der Lagervorspannkraft durch Bauteiltoleranzen und dergleichen verursachte Dehnungen und Stauchungen im Bereich der Stege ausgleichen zu können.

Die Einlegeeinrichtungen 9 und 10 umfassen vorliegend zwei Lagenelemente 9A, 9B bzw. 10A, 10B und sind zusätzlich mit jeweils einem im Wesentlichen halbzylindrisch ausgeführten Einlegeteil 9D bzw. 10D ausgebildet. Die Lagenelemente 9A und 10A der Einlegeeinrichtungen 9 und 10 sind vorliegend aus gummielastischem Material hergestellt, welches während einer Vulkanisation jeweils auf die aus Blech hergestellten Lagenelemente 9B bzw. 10B sowie die vorliegend ebenfalls aus Metall hergestellten Einlegeteile 9D und 10D aufgebracht ist bzw. jeweils die Lagenelemente 9B bzw. 10B sowie die Einlegeteile 9D bzw. 10D zumindest bereichsweise umgreift.

Die Einlegeteile 9D und 10D sind auch aus Kunststoff, Faserverbundwerkstoffen, Naturwerkstoffen, wie Holz, Stein und dergleichen, sowie aus verschiedenen Metallwerkstoffen herstellbar.

Die Lagenelemente 9B bzw. 10B und die Einlegeteile 9D bzw. 10D sind jeweils mit höherer Steifigkeit als die Lagenelemente 9A bzw. 10A ausgeführt. Aufgrund der steiferen Ausgestaltung der Einlegeteile 9D und 10D wird die Lebensdauer der Lagervorrichtung 4 erhöht und die Lagersteifigkeit der Lagervorrichtung 4 in Fahrzeuglängsrichtung x, in Fahrzeugquerrichtung y und in Fahrzeughochrichtung z sind höher als bei Lagervorrichtungen ohne Einlegeteile darstellbar.

Sind die Einlegeteile 9D bzw. 10D in der der Querblattfeder 1 zugewandten Anlageflächen mit einer gummielastischen Schutzschicht ausgebildet, wird eine Oberfläche 11 der Querblattfeder 1 insbesondere bei schwingender Belastung ausreichend gegen Beschädigungen geschützt, welche die Lebensdauer der Querblattfeder in unerwünschtem Umfang beeinträchtigen können.

Zusätzlich ist auch das Eindringen von feinen Schmutzpartikeln zwischen die Einlegeteile 9D und 10D und die Querblattfeder 1 über die Schutzschicht verhinderbar. Des Weiteren sind über eine vorzugsweise als Vulkanisationsschicht der Einlegeteile 9D und 10D ausgeführte Schutzschicht Fertigungstoleranzen im Bereich des Formschlusses zwischen der Lagervorrichtung 4 und der Querblattfeder 1 ausgleichbar und ein Reibwert zwischen den Einlegeteilen 9D und 10D und Querblattfeder 1 durch eine geeignete Materialauswahl und eine entsprechende Oberflächenbeschaffenheit der Schutzschicht erhöhbar.

In die Lagenelemente 9A und 10A sind in Abhängigkeit des jeweils vorliegenden Anwendungsfalles sogenannte Schubbleche einlegbar, um die Rotationssteifigkeit um die Lagerachse; welche der Fahrzeuglängsachse x entspricht, in einem geeigneten Verhältnis zur Vertikalsteifigkeit zur Verfügung stellen zu können. Durch die zusätzlichen Schubbleche sind auch bei hoher Vertikalsteifigkeit verhältnismäßig geringe Torsionssteifigkeiten einstellbar.

Die Einlegeeinrichtungen 9 und 10 sind in den Auflageflächen 11A und 11 B der Querblattfeder 1 zugewandten Anlageflächen 9E und 10E jeweils mit wenigstens einer Aufnahmeeinrichtung 9F bzw. 10F ausgeführt, in die jeweils ein Bereich 1C bzw. 1 D der Querblattfeder 1 in montiertem Zustand der Einlegeeinrichtungen 9 und 10 formschlüssig eingreift. Zusätzlich weist die Querblattfeder 1 in Fahrzeughochrichtung z im Bereich der Auflageflächen 11 A und 11 B jeweils für die Einlegeeinrichtungen 9 bzw. 10 Ausnehmungen 11C, 11 D auf, in die die Einlegeeinrichtungen 9 und 10 über die entsprechend ausgeformten Einlegeteile 9D und 10D formschlüssig eingreifen, um im Betrieb eines Fahrzeuges eine Relativbewegung der Querblattfeder 1 in Fahrzeugquerrichtung y gegenüber dem Fahrzeugaufbau neben der kraftschlüssigen Verbindung mit der Lagervorrichtung 1 auch über einen zusätzlichen Formschluss zwischen der Querblattfeder 1 und der Lagervorrichtung 4 auf konstruktiv einfache Art und Weise zu vermeiden.

Die Ausnehmungen 11C und 11 D bzw. die Konturen der Ausnehmungen 11C und 11 D sind derart ausgeführt, dass im Anlagebereich der Lagervorrichtung 4 an der Querblattfeder 1 im Betrieb eine möglichst gleichmäßige Spannungsverteilung vorliegt, die eine Lebensdauer der Querblattfeder 1 günstig beeinflusst. Die Kontur der Ausnehmungen 11C und 11 D entspricht jeweils im Wesentlichen einer speziellen kosinusförmigen Vertiefung in y-Richtung, womit eine möglichst gleichmäßige Spannungsverteilung im Lagerbereich der Querblattfeder 1 erreicht wird.

Die Querblattfeder 1 ist im Bereich ihrer Oberfläche 11 zumindest im Anlagebereich mit den Lagervorrichtungen 4 und 5 mit einer speziellen Oberflächenbeschichtung bzw. Oberflächenbehandlung ausgeführt, um die Härte der Oberfläche 11 der Querblattfeder 1 gegenüber der übrigen Oberfläche 11 zu erhöhen und im Bereich des Formschlusses zwischen der Querblattfeder 1 und der Lagervorrichtungen 4 und 5 einen größeren Reibbeiwert zur Erhöhung der Verbindungskräfte im Vergleich zum unbehandelten Zustand zur Verfügung zu stellen. Zusätzlich besteht über eine spezielle Oberflächenbeschichtung bzw. Oberflächenbehandlung der Oberfläche 11 der Querblattfeder 1 die Möglichkeit, dass ein Fertigungsprozess für die Herstellung der Bereiche 1C und 1 D der Querblattfeder 1, beispielsweise der Entformungsvorgang der Querblattfeder 1 aus dem Werkzeug, erleichtert bzw. vereinfacht wird.

Als Oberflächenbeschichtung sind beispielsweise eine Klebeschicht, eine Lackschicht, ein Kunststoffmaterial sowie eine mit Nanopartikeln ausgeführte Kunststoffschicht denkbar. Während einer Oberflächenbehandlung wird die Oberfläche 11 der Querblattfeder 1 beispielsweise mit einer die Adhäsionseigenschaft der Oberfläche erhöhenden Flüssigkeiten vorbehandelt und anschließend werden die Härte oder den Reibbeiwert erhöhende Partikel auf die Oberfläche der Querblattfeder im genannten Bereich beispielsweise durch Aufdampfen aufgebracht.

Der Drehpunkt der beiden Einlegeeinrichtungen 9 und 10 liegt in montiertem Zustand der Lagervorrichtungen 4 und 5 im Wesentlichen auf der neutralen Faser 14 der Querblattfeder 1, womit Verformungen im Bereich der Einlegeeinrichtungen 9 und 10 vorteilhafterweise im Wesentlichen gleich groß sind. Die in Fahrzeugquerrichtung bevorzugt kosinusförmigen Ausnehmungen 11C und 11 D der Querblattfeder 1 sind zur formschlüssigen Verbindung der Lagervorrichtung 4 mit der Querblattfeder 1 vorgesehen, wobei die kosinusförmige Ausgestaltung bzw. der kosinusförmige Übergang zwischen der Oberfläche 11 der Querblattfeder 1 außerhalb der Ausnehmungen 11C und 11 D und der Auflageflächen 11 A und 11 B im Bereich der Ausnehmungen 11C und 11 D einen möglichst sanften Übergang im Verlauf der einzelnen Fasern der vorliegend aus Verbundmaterial hergestellten Querblattfeder 1 gewährleistet. Der sanfte Übergang im Faserverlauf der Querblattfeder 1 verhindert auf einfache Art und Weise eine Beeinträchtigung der Lebensdauer der Querblattfeder 1.

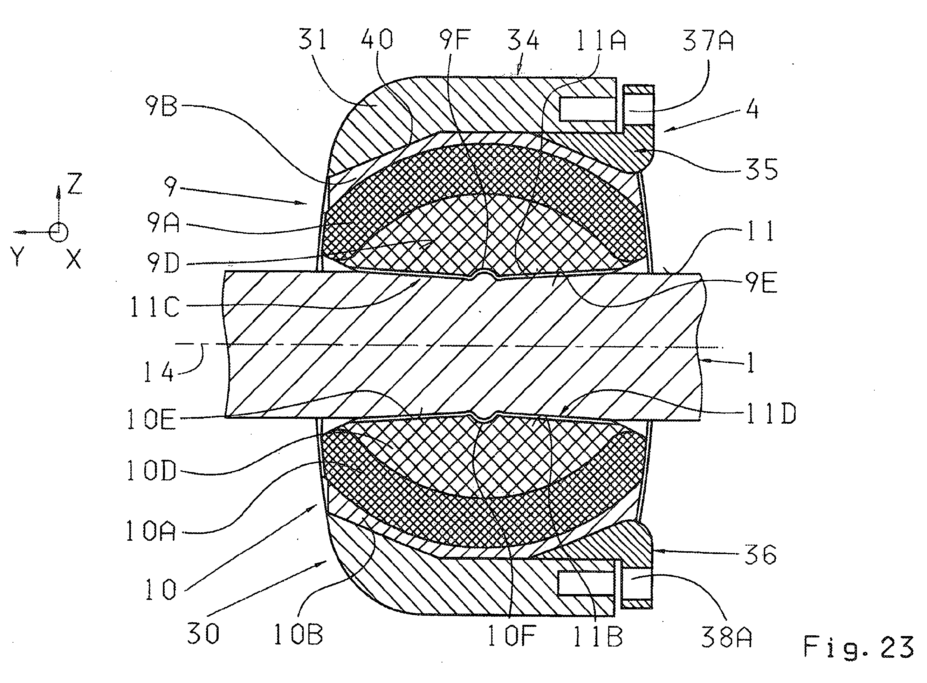

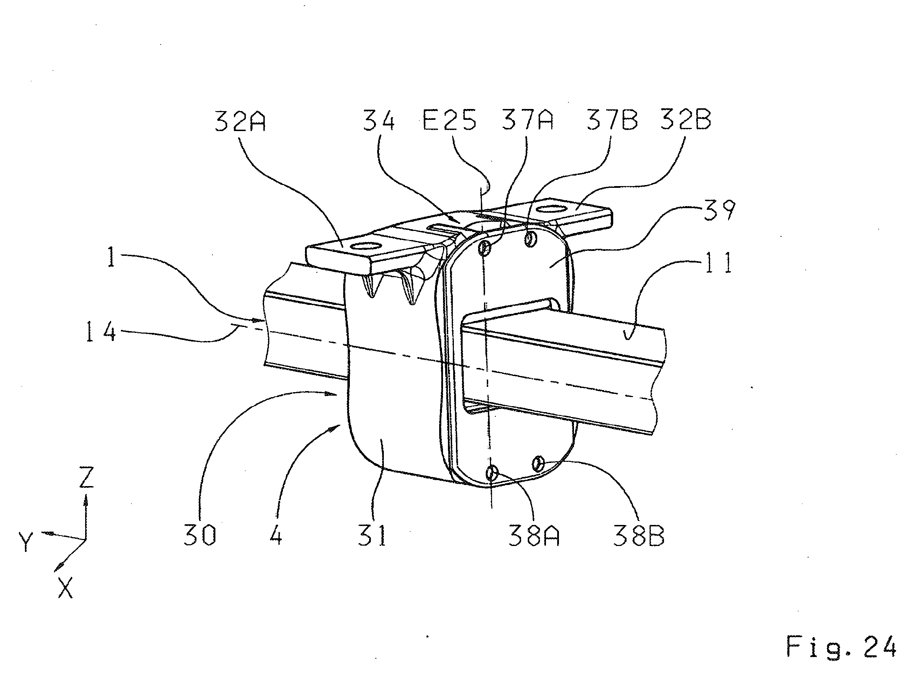

In Fig. 24 bis Fig. 32b sind weitere Lagervorrichtungen 4 gezeigt, welche sich im Wesentlichen lediglich in Teilbereichen von dem in Fig. 22 und Fig. 23 dargestellten Ausführungsbeispiel der Lagervorrichtung 4 unterscheiden, weshalb in der nachfolgenden Beschreibung zu Fig. 24 bis Fig. 32b im Wesentlichen lediglich auf die Unterschiede eingegangen wird und bezüglich der weiteren Funktionsweise der nachfolgenden Lagervorrichtungen 4 auf die Beschreibung zu Fig. 22 und Fig. 23 verwiesen wird. Die Spannelemente der nachfolgend dargestellten Lagervorrichtungen 4 sind in Abhängigkeit des jeweils vorliegenden Anwendungsfalles in der vorbeschriebenen Art und Weise jeweils ein- oder mehrteilig ausführbar.

Bei der in Fig. 24 dargestellten Lagervorrichtung 4 wird die zur Darstellung der gewünschten Lagerfunktionalität erforderliche Vorspannkraft über hohlzylindrisch und segmentartig ausgeführte Spannelemente 35A, 35B und 36A, 36B zur Verfügung gestellt, wobei die Vorspannkraft der Lagervorrichtung 4 über eine mit dem Lagerringelement 31 vorzugsweise über eine Schraubenverbindung fest verbindbare Platte 39 erzeugt wird.

In montiertem Zustand der Abdeckplatte 39 werden die Spannelemente 35B und 36B zunehmend zwischen das Lagerringelement 31 und die Einlegeeinrichtungen 9 und 10 eingeschoben. Die von den Spannelementen 35B und 36B erzeugte Vorspannkraft wird über die Einlegeeinrichtungen 9 und 10 in die Spannelemente 35A und 36A eingeleitet und im Bereich der Schulter 40 und der Querblattfeder 1 gestützt.

Alternativ zu der vorbeschriebenen Schraubenverbindung ist die Abdeckplatte 39 in Abhängigkeit des jeweils vorliegenden Anwendungsfalles auch über andere geeignete Verbindungsarten, wie eine Vernietung, eine Bördelung oder dergleichen mit dem Lagerringelement in gewünschtem Umfang verbindbar.

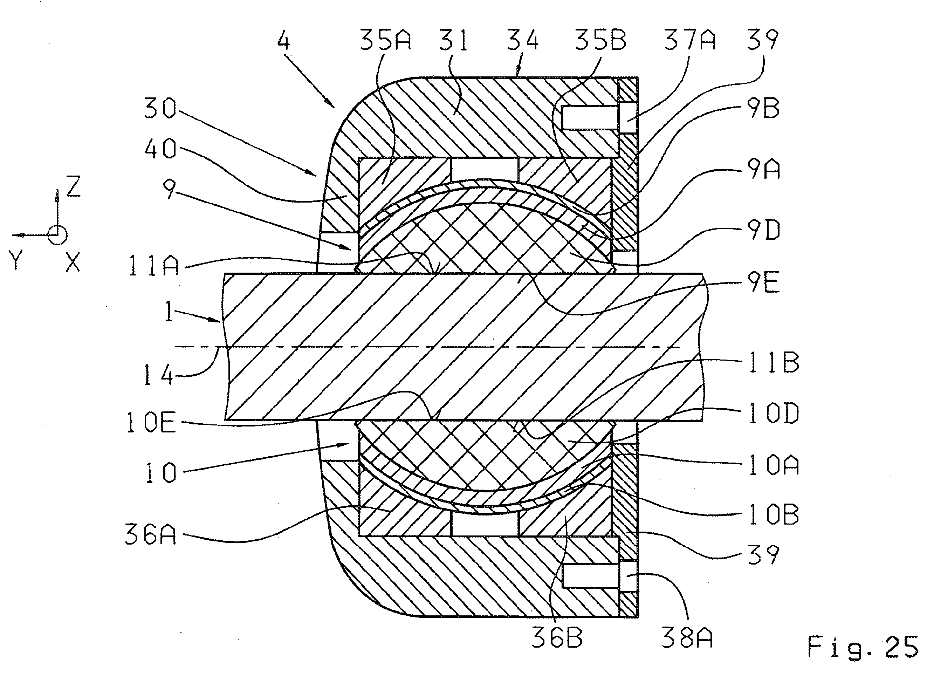

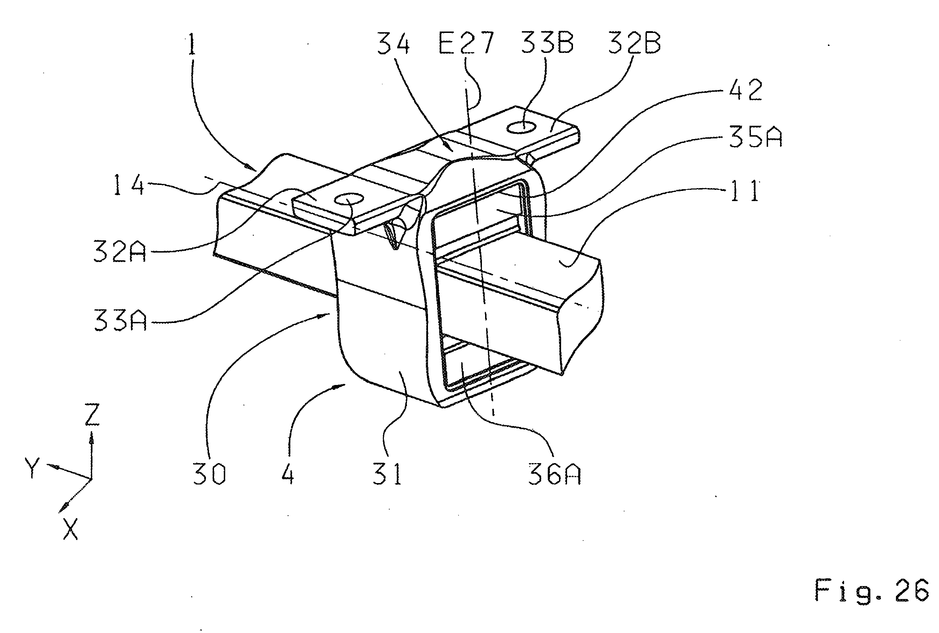

Bei der in Fig. 24 und Fig. 25 dargestellten Lagervorrichtung 4 ist im Bereich zwischen den Einlegeteilen 9D und 10D und der Querblattfeder 1 kein zusätzlicher Formschluss wie bei der erfindungsgemäßen Lagervorrichtung 4 gemäß Fig. 22 und Fig. 23 vorgesehen. Dies gilt auch für die in Fig. 26 bis Fig. 32b dargestellten Lagervorrichtungen 4. Es liegt selbstverständlich im Ermessen des Fachmannes, die weiteren in der Zeichnung dargestellten Lagervorrich-tungen 4 ebenfalls mit einer erfindungsgemäßen formschlüssigen Verbindung im Bereich zwischen den Einlegeeinrichtungen 9 und 10 und der Querblattfeder 1 auszuführen.

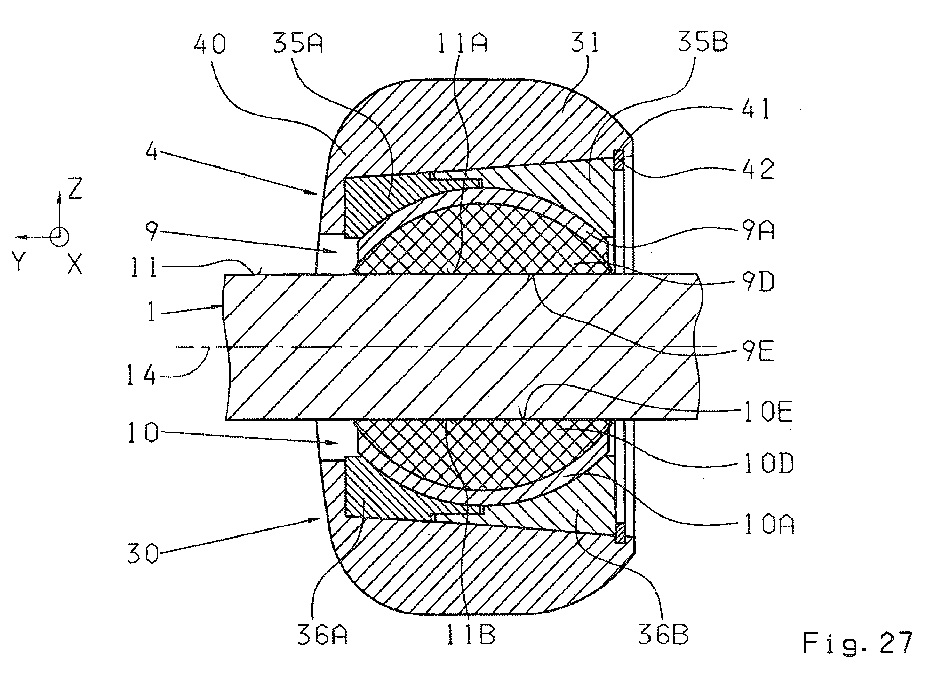

Bei der in Fig. 26 und Fig. 27 dargestellten Lagervorrichtung 4 werden die Spannelemente 35A, 35B und 36A, 36B über einen in einer Nut 41 des Lagerringelementes 31 angeordneten Sicherungsring 42 in ihrer die Vorspannkraft aufbringenden vorspannenden Positionen gehalten. Im Gegensatz zur Lagervorrichtung 4 gemäß Fig. 24 überlappen sich die Spannelemente 35A, 35B und 36A, 36B in Fahrzeugquerrichtung y und in Fahrzeughochrichtung, um eine besonders gute Kraftübertragung zwischen dem Fahrzeugaufbau und der Querblattfeder 1 gewährleisten zu können.

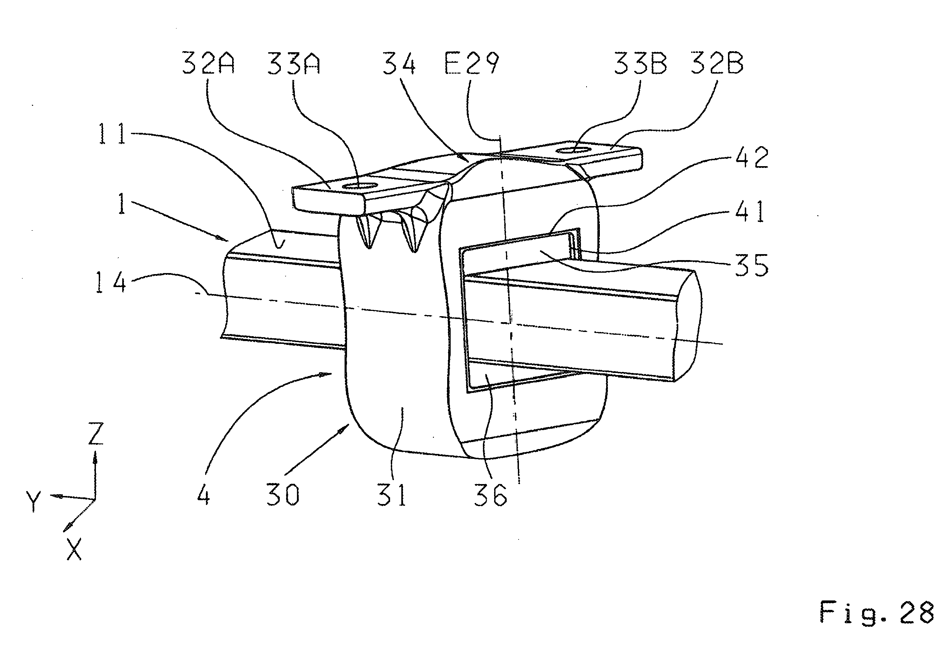

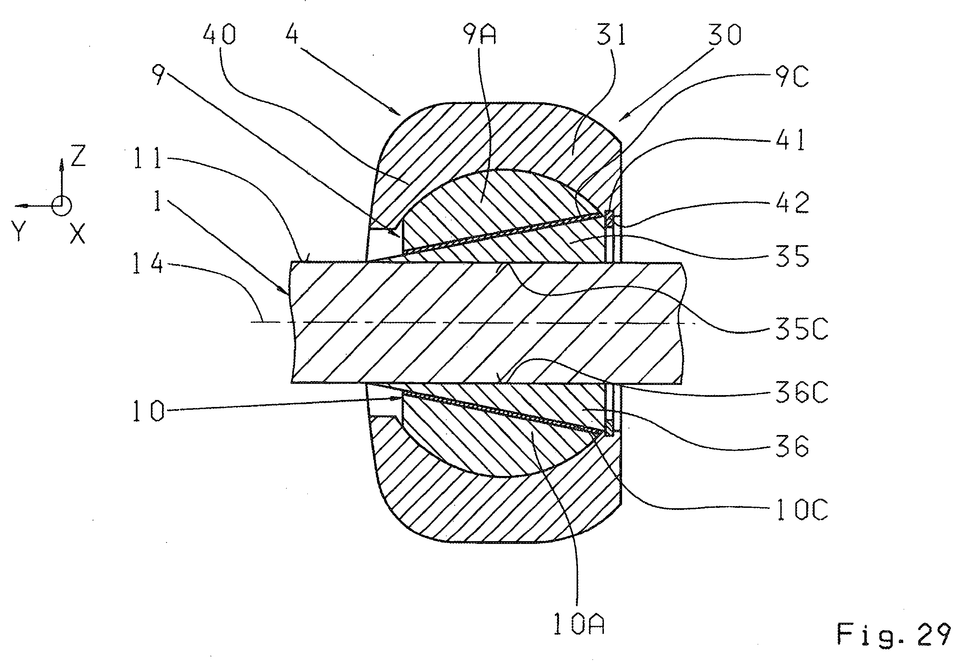

In Fig. 28 und Fig. 29 ist eine weitere Lagervorrichtung 4 gezeigt, bei dem die Spannelemente 35 und 36 jeweils zwischen weiteren Lagenelementen 9C und 10C und der Oberfläche 11 der Querblattfeder 1 positioniert sind, die aus Metall, Faserverbund- oder reinen Kunststoffwerkstoffen herstellbar sind und vorliegend separate Bauteile darstellen, wobei die weiteren Lagenelemente 9C und 10C auch einstückig ausführbar sind. Die weiteren Lagenelemente 9C und 10C sind mit höherer Steifigkeit als die gummielastischen Lagenelemente 9A und 10A ausgeführt und zwischen den gummielastischen Lagenelementen 9A und 10A und den Spannelementen 35, 36 angeordnet. Die keilförmigen Spannelemente 35 und 36 der Lagervorrichtung 4 gemäß Fig. 28 und Fig. 29 erstrecken sich über die gesamte Lagerbreite zwischen den weiteren Lagenelementen 9C und 10C und der Querblattfeder 1.

Die zusätzlichen Lagenelemente 9C und 10C bieten auf einfache Art und Weise die Möglichkeit, die Vorspannkraft von den Spannelementen 35 und 36 möglichst gleichmäßig in die gummielastischen Lagenelemente 9A und 10A insbesondere während Kippbewegungen der Querblattfeder 1 im Bereich der Lagervorrichtung 4 einzuleiten. Des Weiteren sind die weiteren Lagenelemente 9C und 10C wiederum mit den Lagenelementen 9A und 10A anwendungsfallabhängig durch Vulkanisation verbindbar und bieten auf einfache Art und Weise die Möglichkeit, dass die gummielastischen Lagenelemente 9A und 10A während der Montage der Lagervorrichtung 4 nicht von den Spannelementen 35 und 36 beschädigt werden.

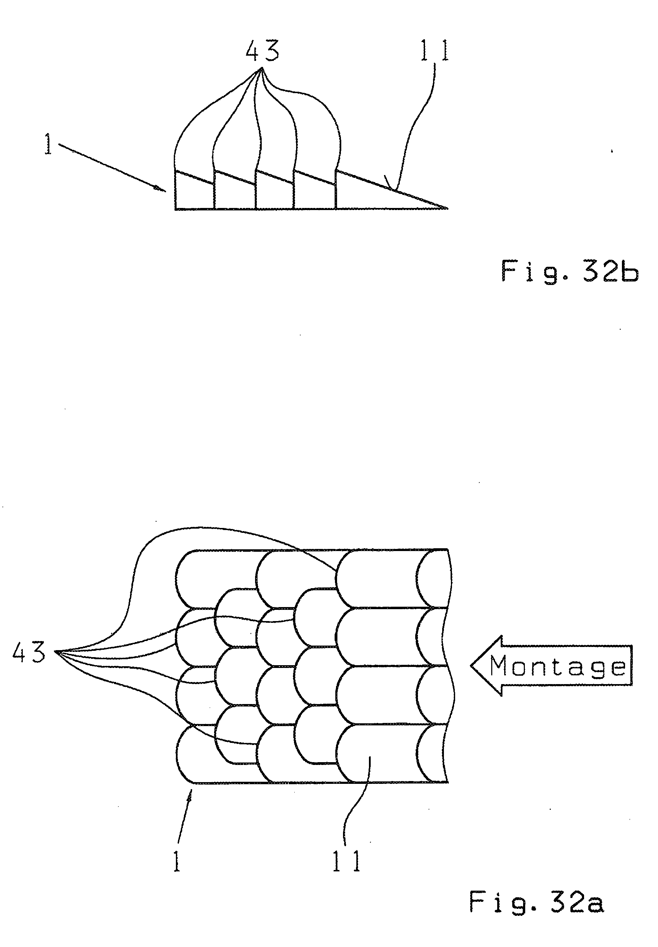

Die Spannelemente 35 und 36 werden wiederum über den Sicherungsring 42 in ihrer vorspannenden Position gehalten. Um nach der Montage der Lagervorrichtung 4 ein unerwünschtes selbsttätiges Lockern der Spannelemente 35 und 36 zu vermeiden, sind die Spannelemente in der Oberfläche 11 der Querblattfeder 1 zugeordneten Oberflächenbereichen 35C, 36C mit einer einen Reibkoeffizienten erhöhenden Oberflächenbeschichtung ausgeführt. Alternativ hierzu besteht auch die Möglichkeit, die Oberfläche 11 der Querblattfeder 1 im Anlagebereich mit den Spannelementen 35 und 36 mit einer den Reibkoeffizienten erhöhenden Beschichtung oder einem beispielsweise in Fig. 32a und Fig. 32b gezeigten speziellen Oberflächenprofil, welche das Lockern der Spannelemente 35 und 36 unterbindet, auszuführen.

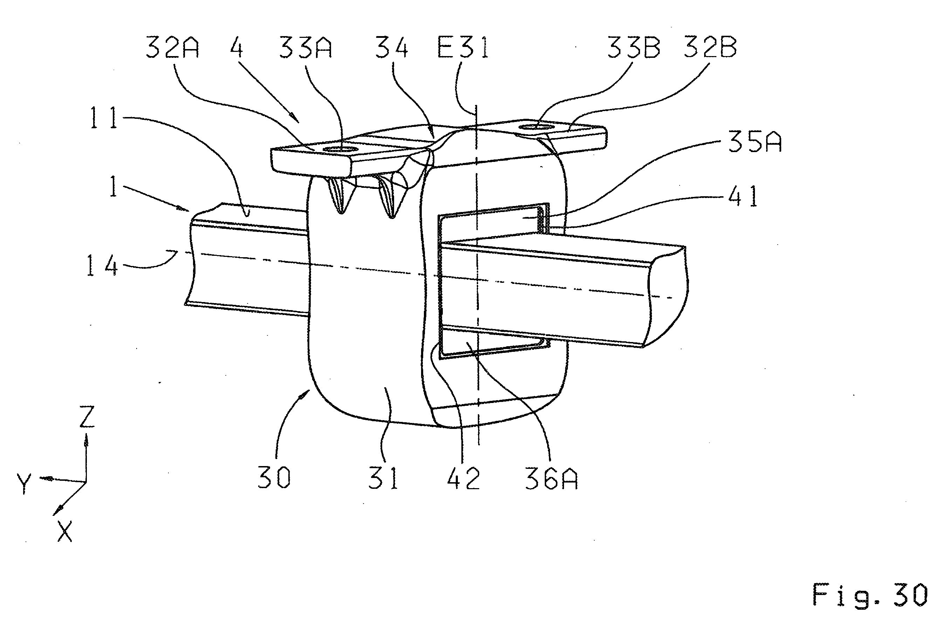

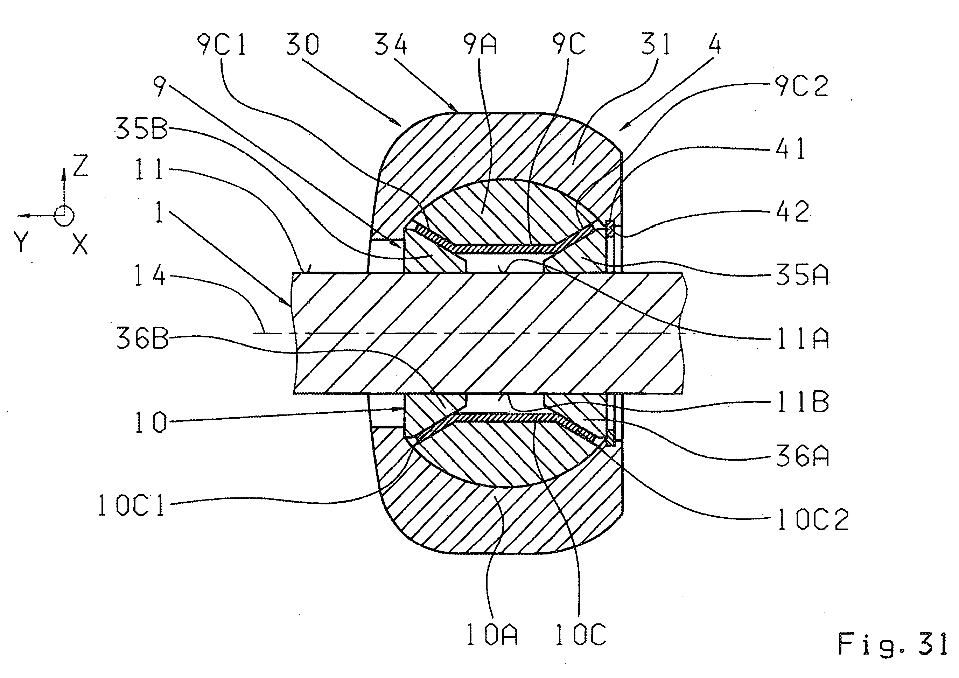

Eine weitere Lagervorrichtung 4 ist in Fig. 30 und Fig. 31 gezeigt, bei welchem die Lagervorrichtung 4 einen ähnlichen Aufbau wie die Lagervorrichtung 4 gemäß Fig. 28 und Fig. 29 jedoch in symmetrischer Ausführung aufweist. Die Vorspannkraft wird jeweils wieder über keilförmige Spannelemente 35A, 35B und 36A, 36B erzeugt, die zwischen der Oberfläche der Querblattfeder 1 und den weiteren Lagenelementen 9C und 10C und den gummielastischen Lagenelementen 9A und 10A angeordnet sind.

Die weiteren Lagenelemente 9C und 10C sind mit im Wesentlichen ebenen Mittelbereichen und jeweils an die Schrägen der Spannelemente 35A, 35B und 36A, 36B angepassten Winkelendbereichen 9C1, 9C2, 10C1, 10C2 ausgeführt, wobei die Lagenelemente 9A und 10A jeweils in ihrem Anlagebereich an den weiteren Lagenelementen 9C und 10C an die Form der Lagenelemente 9C und 10C angepasst sind. Auf ihrer der Querblattfeder 1 abgewandten Seite sind die gummielastischen Lagenelemente 9A und 10A direkt an das Lagerringelement 31 angelegt.

Fig. 32a und Fig. 32b zeigen eine Oberfläche 11 der Querblattfeder 1 gemäß Fig. 28 bzw. gemäß Fig. 30 im Anlagebereich der Spannelemente 35 und 36 bzw. 35A, 35B und 36A, 36B, mittels der ein Zurückrutschen der Spannelemente nach der Montage aus ihrer vorspannenden Position auf konstruktiv einfache Art und Weise verhindert wird. In Fig. 32a ist durch den Pfeil die Montagerichtung der Spannelemente grafisch wiedergegeben. Da das sägezahnartige Fischschuppenprofil ein Führen der Spannelemente über die Oberfläche 11 der Querblattfeder in Montagerichtung erlaubt, wird eine Montage der Lagervorrichtung 4 durch das Oberflächenprofil der Querblattfeder 1 nicht erschwert. Nach der Montage wird ein Zurückrutschen der Spannelemente durch Spitzen 43 wirksam verhindert.

Generell bietet der vorbeschriebene Gegenstand die Möglichkeit, im Betrieb eines Fahrzeuges im Bereich einer Querblattfeder angreifende Kräfte und Momente ohne Durchbohrung der Querblattfeder in gewünschtem Umfang im Bereich eines Fahrzeugaufbaus abzustützen. Zudem ist diese Anforderung auch ohne die Einführung eines Fremdteiles in die Querblattfeder gewährleistet. Das bedeutet, dass Kräfte und Momente von Zentrallagern auf eine Querblattfeder wieder übertragbar sind, ohne dass die Dauerhaltbarkeit einer Querblattfeder durch Löcher zum Verschrauben oder Vernieten bzw. andere starke Umlenkungen der Fasern negativ beeinflusst wird.

Die erfindungsgemäßen Lagervorrichtungen sind mit der jeweils erforderlichen hohen Steifigkeit ausgeführt und die Oberfläche einer Querblattfeder wird durch die entsprechend ausgeführten Lagervorrichtungen im Betrieb nicht verletzt. Darüber hinaus treten im Bereich der Oberfläche einer Querblattfeder möglichst geringe Spannungen auf, womit die Querblattfeder durch die Lagervorrichtung auch bei wechselnder Belastung nicht beschädigt wird. Relativbewegungen im Bereich zwischen der Oberfläche der Querblattfeder und der Lagervorrichtungen bzw. der Zentrallager werden auf konstruktiv einfache und bauraumgünstige Art und Weise vermieden. Die erfindungsgemäße Lagergestaltung bietet zudem auf konstruktiv einfache Art und Weise die Möglichkeit, dass die Torsionsachse in Fahrzeuglängsrichtung bzw. in x-Richtung sich mit der neutralen Faser der Querblattfeder schneidet und parallel zu einer xy-Ebene liegt. Eine exakte Positionierung der Lagervorrichtung auf der Querblattfeder sowohl in x- und y-Richtung ist ebenfalls gewährleistet, womit eine Funktionalität einer Querblattfeder mit hoher Präzision zur Verfügung stellbar ist.

Bedarfsweise bietet die erfindungsgemäße Lagervorrichtung auch die Möglichkeit, die Querblattfeder direkt am Fahrzeugaufbau bzw. ohne Isolation eines Hilfsrahmens gegenüber dem Fahrzeugaufbau am Hilfsrahmen zu befestigen.

Die erfindungsgemäße Lagervorrichtung ist auch ohne aufwändige konstruktive Maßnahmen in unterschiedliche Radaufhängungskonfigurationen, die mit einer Querblattfeder und ähnlichen Faserverbundbauteilen ausgebildet sind, integrierbar.

Die in Bezug auf die Fahrzeughochachse z obere und die untere Hälfte der Lagervorrichtung 4 können in Abhängigkeit des jeweils vorliegenden Anwendungsfalles sowohl symmetrisch wie auch mit einer geringen Unsymmetrie ausgeführt werden, wobei Lagerunsymmetrien der Lagervorrichtung 4 gezielt zur Abstimmung der Lagersteifigkeit in den unterschiedlichen Richtungen nutzbar sind.

### Bezugszeichen

- 1: Querblattfeder
- 1A, 1B: Endbereich
- 1C, 1D: Bereich
- 1C1 bis 1 C4: Nase
- 2,3: äußeres Lager
- 4, 5: Lagervorrichtung
- 6: Lageraußenschale
- 6A: Vorsprung
- 7: Lageraußenschale
- 7A: Vorsprung
- 8: Schraubeneinrichtung
- 8A bis 8D: Schraubenelement
- 9: Einlegeeinrichtung
- 9A: Lagenelement
- 9A1, 9A2: wulstartiger Endbereich
- 9A3, 9A4: Hohlraum
- 9B: Lagenelement
- 9B1, 9B2: Endbereich
- 9C: Lagenelement
- 9C1, 9C2: Endbereich
- 9D: Einlegeteil
- 9D1: Ausnehmung
- 9E: Anlagefläche
- 9F: Aufnahmeeinrichtung
- 10: Einlegeeinrichtung
- 10A: Lagenelement
- 10A1, 10A2: wulstartiger Endbereich
- 10A3, 10A4: Hohlraum
- 10B: Lagenelement
- 10B1, 10B2: Endbereich
- 10C: Lagenelement
- 10C1, 10C2: Endbereich
- 10D: Einlegeteil
- 10D1: Ausnehmung
- 10E: Anlagefläche
- 10F: Aufnahmeeinrichtung
- 11: Oberfläche der Querblattfeder
- 11A, 11B: Auflagefläche
- 11C, 11D: Ausnehmung der Querblattfeder
- 12: Anlagefläche der Lagerschale
- 13: Steg
- 14: neutrale Faser
- 16, 17: Erhöhung
- 18, 19: Anschlagbereich
- 18A bis 19B: Anschlag
- 20, 21: Bohrung
- 30: Lageraußenschaleneinrichtung
- 31: Lagerringelement
- 32A, 32B: Lasche
- 33A, 33B: Bohrung
- 34: Zentrierbereich
- 35: oberes Spannelement
- 35A, 35B: Spannelement
- 36: unteres Spannelement
- 36A, 36B: Spannelement
- 37A, 37B: Bohrung
- 38A, 38B: Bohrung
- 39: Platte
- 40: Schulter
- 41: Nut
- 42: Sicherungsring
- 43: Spitzen
- 100A bis 100E: Rippe
- 111: Oberseite der Querblattfeder
- 112: Unterseite der Querblattfeder
- 113, 114: Seitenfläche der Querblattfeder
- 115, 116: Randbereich der Querblattfeder
- 200A bis 200D: Rille
- E3 bis E31: Schnittebene
- TE1, TE2: Trennebene
- x: Fahrzeuglängsrichtung
- y: Fahrzeugquerrichtung
- z: Fahrzeughochrichtung

## Patentansprüche

1. Lagervorrichtung (4) einer Querblattfeder (1), die im Bereich einer Fahrzeugachse eines Fahrzeuges montierbar ist, mit einer Lageraußenschaleneinrichtung (30) und mit von der Lageraußenschaleneinrichtung (30) zumindest bereichsweise umgriffenen Einlegeeinrichtungen (9, 10), die jeweils wenigstens zwei Lagenelemente (9A, 9B, 9C, 10A, 10B, 10C) mit unterschiedlicher Steifigkeit aufweisen, wobei die Einlegeeinrichtungen (9, 10) in montiertem Zustand jeweils zwischen der Lageraußenschaleneinrichtung (30) und der Querblattfeder (1) angeordnet sind und die Querblattfeder (1) im Bereich der Auflagefläche (11 A, 11 B) für Einlegeeinrichtungen (9, 10) mit einer Ausnehmung (11C, 11D) ausgebildet ist, in die die Einlegeeinrichtungen (9, 10) zumindest bereichsweise formschlüssig eingreifen, und wobei die Ausnehmungen (11C, 11 D) in Bezug auf eine Fahrzeughochachse (z) jeweils in einer Oberseite (111) und einer Unterseite (112) der Querblattfeder (1) vorgesehen sind, **dadurch gekennzeichnet, dass** die Ausnehmungen (11C, 11D) der Querblattfeder (1) in montiertem Zustand der Querblattfeder (1) in Fahrzeuglängsrichtung (x) jeweils von zwischen der Oberseite (111) und der Unterseite (112) und Seitenflächen (113, 114) gebildeten Randbereichen (115, 116) der Oberseite (111) und der Unterseite (112) zumindest bereichsweise begrenzt sind, wobei die Ausnehmungen (11C, 11 D) in den Randbereichen (115, 116) eine geringere Tiefe aufweisen als in Bereichen zwischen den Randbereichen.

2. Lagervorrichtung nach Anspruch 1, **dadurch gekennzeichnet, dass** die Einlegeeinrichtungen (9, 10) in den Auflageflächen (11A, 11 B) der Querblattfeder (1) zugewandten Anlageflächen (9E, 10E) jeweils mit wenigstens einer Aufnahmeeinrichtung (9F, 10F) ausgeführt sind, in die ein Bereich (1 C, 1 D) der Querblattfeder (1) in montiertem Zustand der Einlegeeinrichtungen (9, 10) eingreift.

3. Lagervorrichtung nach Anspruch 2, **dadurch gekennzeichnet, dass** die in die Einlegeeinrichtungen (9, 10) eingreifenden Bereiche der Querblattfeder (1) im Bereich der Ausnehmungen (11C, 11D) der Querblattfeder (1) vorgesehen ist.

4. Lagervorrichtung nach einem der Ansprüche 1 bis 3, **dadurch gekennzeichnet, dass** die Querblattfeder (1) in Bezug auf eine Fahrzeughochachse (z) ober- und unterseitig angeordneten Anlagebereichen (11C, 11D) für die Einlegeeinrichtungen (9, 10) mit konvexen Erhebungen (16, 17) ausgebildet ist.

5. Lagervorrichtung nach einem der Ansprüche 1 bis 4, **dadurch gekennzeichnet, dass** zwischen den Lagenelementen (9A bis 9C und 10A bis 10C) und der Querblattfeder jeweils ein vorzugsweise wenigstens annähernd halbzylindrisch ausgeführtes Einlegeteil (9D, 10D) angeordnet ist, die mit höherer Steifigkeit ausgebildet sind als die mit geringerer Steifigkeit ausgeführten Lagenelemente (9A, 10A).

6. Lagervorrichtung nach Anspruch 5, **dadurch gekennzeichnet, dass** die Einlegeteile (9D, 10D) in montiertem Zustand zumindest in der Querblattfeder (1) zugewandten Anlagenbereichen (9E, 9F) jeweils mit einer gummielastischen Schutzschicht ausgebildet sind.

7. Lagervorrichtung nach einem der Ansprüche 1 bis 6, **dadurch gekennzeichnet, dass** zumindest die mit niedrigerer Steifigkeit ausgebildeten Lagenelemente (9A, 10A) Aussparungen (9A3, 9A4, 10A3, 10A4) aufweisen.

8. Lagervorrichtung nach einem der Ansprüche 1 bis 7, **dadurch gekennzeichnet, dass** die mit höherer Steifigkeit ausgebildeten Lagenelemente (9B, 9C und 10B, 10C) wenigstens in den Endbereichen (9B1, 9B2, 9C1, 9C2 und 10B1, 10B2, 10C1, 10C2) zumindest bereichsweise eine gummielastische Schutzschicht aufweisen.

9. Lagervorrichtung nach einem der Ansprüche 1 bis 8, **dadurch gekennzeichnet, dass** die mit der niedrigeren Steifigkeit ausgebildeten Lagenelemente (9A bis 10A) die Lageraußenschaleneinrichtung (30) mit in montiertem Zustand in Fahrzeugquerrichtung weisenden vorzugsweise wulstartigen Endbereichen (9A1, 9A2, 10A1, 10A2) übergreifen, wobei die Lageraußenschaleneinrichtung (30) jeweils vorzugsweise mit Vorsprüngen (6A, 7A) in die wulstartigen Endbereiche (9A1, 9A2, 10A1, 10A2) der Lagenelemente (9, 10) eingreifen.

10. Lagervorrichtung nach einem der Ansprüche 1 bis 9, **dadurch gekennzeichnet, dass** die Lageraußenschaleneinrichtung (30) zwei miteinander verbindbare Lageraußenschalen (6, 7) aufweist, welche die Einlegeeinrichtungen (9, 10) zumindest bereichsweise umgreifen.

11. Lagervorrichtung nach Anspruch 10, **dadurch gekennzeichnet, dass** die Einlegeeinrichtungen (9, 10) über eine die Lageraußenschalen (6, 7) miteinander und mit einem Fahrzeugaufbau eines Fahrzeuges verbindende Schraubeneinrichtung (8) zumindest kraftschlüssig mit den Lageraußenschalen (6, 7) und der Querblattfeder (1) verbindbar sind.

12. Lagervorrichtung nach einem der Ansprüche 1 bis 9, **dadurch gekennzeichnet, dass** die Lageraußenschaleneinrichtung (30) ein einteiliges Lagerringelement (31) umfasst und die Einlegeeinrichtungen (9, 10) über Spannelemente (35, 36; 35A, 35B, 36A, 36B) zumindest kraftschlüssig mit dem Lagerringelement (31) und der Querblattfeder (1) in Wirkverbindung bringbar sind.

13. Lagervorrichtung nach Anspruch 12, **dadurch gekennzeichnet, dass** die Spannelemente (35, 36; 35A, 35B, 36A, 36B) mit zumindest einem keilförmigen Bereich ausgebildet sind, der jeweils zwischen den Einlegeeinrichtungen (9, 10) und der Querblattfeder (1) oder zwischen den Einlegeeinrichtungen (9, 10) und dem Lagerringelement (31) anordenbar sind.

14. Lagervorrichtung nach Anspruch 12 oder 13, **dadurch gekennzeichnet, dass** jeweils wenigstens ein Teil der Spannelemente (35, 36) zur Erzeugung einer spannelementseitigen Vorspannkraft auf die Einlegeeinrichtungen (9, 10) und die Querblattfeder (1) mit dem Lagerringelement (31) in Wirkverbindung bringbar ist und die Vorspannkraft an einer Schulter (40) des Lagerringelementes (31) abstützbar ist.

15. Lagervorrichtung nach einem der Ansprüche 1 bis 14, **dadurch gekennzeichnet, dass** die mit niedrigerer Steifigkeit ausgebildeten Lagenelemente (9A, 10A) die Querblattfeder (1) mit Anschlagbereichen (18A, 19B) in montiertem Zustand in Fahrzeuglängsrichtung (x) und in Fahrzeughochrichtung (z) jeweils zumindest bereichsweise übergreifen, wobei die Anschlagbereiche (18A bis 19B) in der Querblattfeder (1) zugewandten Anlagebereichen und/oder in den den Lageraußenschalen (6, 7) zugewandten Anlagebereichen vorzugsweise mit wenigstens annähernd in Fahrzeuglängsrichtung (x) orientierten Vorsprüngen und/oder Ausnehmungen ausgeführt sind.

## Claims

1. Bearing apparatus (4) of a transverse leaf spring (1) which can be mounted in the region of a vehicle axle of a vehicle, having a bearing outer shell device (30) and having insert devices (9, 10) which are engaged around at least in regions by the bearing outer shell device (30) and have in each case at least two position elements (9A, 9B, 9C, 10A, 10B, 10C) with different rigidity, the insert devices (9, 10) being arranged in the mounted state in each case between the bearing outer shell device (30) and the transverse leaf spring (1), and the transverse leaf spring (1) being configured in the region of the supporting face (11A, 11B) for insert devices (9, 10) with a recess (11C, 11D), into which the insert devices (9, 10) engage at least in regions in a positively locking manner, and the recesses (11C, 11D) being provided, in relation to a vehicle vertical axis (z), in each case in a top side (111) and a bottom side (112) of the transverse leaf spring (1), **characterized in that**, in the mounted state of the transverse leaf spring (1), the recesses (11C, 11D) of the transverse leaf spring (1) are delimited at least in regions in the vehicle longitudinal direction (x) in each case by edge regions (115, 116) of the top side (111) and the bottom side (112) which are formed between the top side (111) and the bottom side (112) and side faces (113, 114), the recesses (11C, 11D) having a smaller depth in the edge regions (115, 116) than in regions between the edge regions.

2. Bearing apparatus according to Claim 1, **characterized in that** the insert devices (9, 10) are configured in the bearing faces (9E, 10E) which face the supporting faces (11A, 11B) of the transverse leaf spring (1) in each case with at least one receiving device (9F, 10F), into which a region (1C, 1D) of the transverse leaf spring (1) engages in the mounted state of the insert devices (9, 10).

3. Bearing apparatus according to Claim 2, **characterized in that** the regions of the transverse leaf spring (1) which engages into the insert devices (9, 10) are provided in the region of the recesses (11C, 11D) of the transverse leaf spring (1).

4. Bearing apparatus according to one of Claims 1 to 3, **characterized in that** the transverse leaf spring (1) is configured with convex elevations (16, 17) in bearing regions (11C, 11D) which are arranged on the top and bottom sides in relation to a vehicle vertical axis (z) for the insert devices (9, 10).

5. Bearing apparatus according to one of Claims 1 to 4, **characterized in that** in each case one insert part (9D, 10D) which is preferably of at least approximately semi-cylindrical configuration is arranged between the position elements (9A to 9C and 10A to 10C) and the transverse leaf spring, which insert parts (9D, 10D) are configured with a greater rigidity than the position elements (9A, 10A) which are configured with a lower rigidity.

6. Bearing apparatus according to Claim 5, **characterized in that**, in the mounted state, the insert parts (9D, 10D) are configured at least in bearing regions (9E, 9F) which face the transverse leaf spring (1) in each case with an elastomeric protective layer.

7. Bearing apparatus according to one of Claims 1 to 6, **characterized in that** at least the position elements (9A, 10A) which are configured with a lower rigidity have cut-outs (9A3, 9A4, 10A3, 10A4).

8. Bearing apparatus according to one of Claims 1 to 7, **characterized in that** the position elements (9B, 9C and 10B, 10C) which are configured with a greater rigidity have, at least in regions, an elastomeric protective layer at least in the end regions (9B1, 9B2, 9C1, 9C2 and 10B1, 10B2, 10C1, 10C2).

9. Bearing apparatus according to one of Claims 1 to 8, **characterized in that** the position elements (9A to 10A) which are configured with the lower rigidity engage over the bearing outer shell device (30) with preferably bead-like end regions (9A1, 9A2, 10A1, 10A2) which point in the vehicle transverse direction in the mounted state, the bearing outer shell device (30) in each case engaging preferably with projections (6A, 7A) into the bead-like end regions (9A1, 9A2, 10A1, 10A2) of the position elements (9, 10).

10. Bearing apparatus according to one of Claims 1 to 9, **characterized in that** the bearing outer shell device (30) has two bearing outer shells (6, 7) which can be connected to one another and engage around the insert devices (9, 10) at least in regions.

11. Bearing apparatus according to Claim 10, **characterized in that** the insert devices (9, 10) can be connected at least in a non-positive manner to the bearing outer shells (6, 7) and the transverse leaf spring (1) via a screw device (8) which connects the bearing outer shells (6, 7) to one another and to a vehicle body of a vehicle.

12. Bearing apparatus according to one of Claims 1 to 9, **characterized in that** the bearing outer shell device (30) comprises a single-piece bearing ring element (31), and the insert devices (9, 10) can be brought into operative connection via clamping elements (35, 36; 35A, 35B, 36A, 36B) at least in a non-positive manner to the bearing ring element (31) and the transverse leaf spring (1).

13. Bearing apparatus according to Claim 12, **characterized in that** the clamping elements (35, 36; 35A, 35B, 36A, 36B) are configured with at least one wedge-shaped region which can be arranged in each case between the insert devices (9, 10) and the transverse leaf spring (1) or between the insert devices (9, 10) and the bearing ring element (31).

14. Bearing apparatus according to Claim 12 or 13, **characterized in that** in each case at least part of the clamping elements (35, 36) can be brought into operative contact with the bearing ring element (31) in order to generate a prestressing force on the clamping-element side on the insert devices (9, 10) and the transverse leaf spring (1), and the prestressing force can be supported on a shoulder (40) of the bearing ring element (31).

15. Bearing apparatus according to one of Claims 1 to 14, **characterized in that** the position elements (9A, 10A) which are configured with a lower rigidity engage over the transverse leaf spring (1) with stop regions (18A, 18B) in the mounted state in the vehicle longitudinal direction (x) and in the vehicle vertical direction (z) in each case at least in regions, the stop regions (18A to 19B) preferably being configured in bearing regions which face the transverse leaf spring (1) and/or in the bearing regions which face the bearing outer shells (6, 7) with projections and/or recesses which are oriented at least approximately in the vehicle longitudinal direction (x).

## Revendications

1. Dispositif de palier (4) d'un ressort à lame transversal (1) qui peut être monté dans la région d'un essieu de véhicule, comprenant un dispositif à coque de palier extérieure (30) et des dispositifs d'insertion (9, 10) en prise au moins en partie sur leur pourtour avec le dispositif à coque de palier extérieure (30), lesquels présentent au moins à chaque fois deux éléments de palier (9A, 9B, 9C, 10A, 10B, 10C) de rigidité différente, les dispositifs d'insertion (9, 10), dans l'état monté, étant à chaque fois disposés entre le dispositif à coque de palier extérieure (30) et le ressort à lame transversal (1) et le ressort à lame transversal (1) étant réalisé, dans la région de la surface d'appui (11A, 11B) pour les dispositifs d'insertion (9, 10), avec un évidement (11C, 11D), dans lequel viennent en prise les dispositifs d'insertion (9, 10), au moins en partie par engagement par correspondance de forme, et les évidements (11C, 11D), par rapport à un axe vertical du véhicule (z), étant à chaque fois prévus dans un côté supérieur (111) et un côté inférieur (112) du ressort à lame transversal (1), **caractérisé en ce que** les évidements (11C, 11D) du ressort à lame transversal (1), dans l'état monté du ressort à lame transversal (1), sont limités au moins en partie, dans la direction longitudinale du véhicule (x), à chaque fois par des régions de bord (115, 116) du côté supérieur (111) et du côté inférieur (112) formées entre le côté supérieur (111) et le côté inférieur (112) et des surfaces latérales (113, 114), les évidements (11C, 11D) présentant, dans les régions de bord (115, 116), une moindre profondeur que dans les régions entre les régions de bord.

2. Dispositif de palier selon la revendication 1, **caractérisé en ce que** les dispositifs d'insertion (9, 10) sont réalisés, dans des surfaces d'application (9E, 10E) tournées vers les surfaces d'appui (11A, 11B) du ressort à lame transversal (1), à chaque fois avec au moins un dispositif de réception (9F, 10F) dans lequel s'engage une région (1C, 1D) du ressort à lame transversal (1) dans l'état monté des dispositifs d'insertion (9, 10).

3. Dispositif de palier selon la revendication 2, **caractérisé en ce que** les régions du ressort à lame transversal (1) venant en prise dans les dispositifs d'insertion (9, 10) sont prévues dans la région des évidements (11C, 11D) du ressort à lame transversal (1).

4. Dispositif de palier selon l'une quelconque des revendications 1 à 3, **caractérisé en ce que** le ressort à lame transversal (1) est réalisé avec des rehaussements convexes (16, 17) dans des régions d'appui (11C, 11D) pour les dispositifs d'insertion (9, 10) disposées, par rapport à un axe vertical du véhicule (z), du côté supérieur et du côté inférieur.

5. Dispositif de palier selon l'une quelconque des revendications 1 à 4, **caractérisé en ce qu'**entre les éléments de palier (9A à 9C et 10A à 10C) et le ressort à lame transversal est à chaque fois disposée une partie d'insertion (9D, 10D) réalisée de préférence au moins approximativement sous forme semi-cylindrique, lesquelles parties d'insertion sont réalisées avec une plus grande rigidité que les éléments de palier (9A, 10A) réalisés avec une plus faible rigidité.

6. Dispositif de palier selon la revendication 5, **caractérisé en ce que** les parties d'insertion (9D, 10D), dans l'état monté, sont réalisées au moins dans des régions d'appui (9E, 9F) tournées vers le ressort à lame transversal (1), avec à chaque fois une couche de protection ayant l'élasticité du caoutchouc.

7. Dispositif de palier selon l'une quelconque des revendications 1 à 6, **caractérisé en ce qu'**au moins les éléments de palier (9A, 10A) réalisés avec une plus faible rigidité présentent des évidements (9A3, 9A4, 10A3, 10A4).

8. Dispositif de palier selon l'une quelconque des revendications 1 à 7, **caractérisé en ce que** les éléments de palier (9B, 9C et 10B, 10C) réalisés avec une plus grande rigidité présentent, au moins dans les régions d'extrémité (9B1, 9B2, 9C1, 9C2 et 10B1, 10B2, 10C1, 10C2), au moins en partie une couche de protection ayant l'élasticité du caoutchouc.

9. Dispositif de palier selon l'une quelconque des revendications 1 à 8, **caractérisé en ce que** les éléments de palier (9A à 10A) réalisés avec la plus faible rigidité viennent en prise par le dessus avec le dispositif à coque de palier extérieure (30) par des régions d'extrémité (9A1, 9A2, 10A1, 10A2) de préférence en forme de bourrelet, tournées dans la direction transversale du véhicule dans l'état monté, le dispositif à coque de palier extérieure (30) venant en prise à chaque fois de préférence avec des saillies (6A, 7A) dans les régions d'extrémité en forme de bourrelet (9A1, 9A2, 10A1, 10A2) des éléments de palier (9, 10).

10. Dispositif de palier selon l'une quelconque des revendications 1 à 9, **caractérisé en ce que** le dispositif à coque de palier extérieure (30) présente deux coques de palier extérieures (6, 7) pouvant être connectées l'une à l'autre, lesquelles viennent en prise au moins en partie autour des dispositifs d'insertion (9, 10).

11. Dispositif de palier selon la revendication 10, **caractérisé en ce que** les dispositifs d'insertion (9, 10) peuvent être connectés au moins par engagement par force avec les coques de palier extérieures (6, 7) et le ressort à lame transversal (1) par le biais d'un dispositif de vissage (8) reliant les coques extérieures de palier (6, 7) l'une à l'autre et à une carrosserie d'un véhicule.

12. Dispositif de palier selon l'une quelconque des revendications 1 à 9, **caractérisé en ce que** le dispositif à coque de palier extérieure (30) comprend un élément de bague de palier d'une seule pièce (31) et les dispositifs d'insertion (9, 10) peuvent être amenés en liaison fonctionnelle au moins par engagement par force avec l'élément de bague de palier (31) et le ressort à lame transversal (1) par le biais d'éléments de serrage (35, 36 ; 35A, 35B, 36A, 36B).

13. Dispositif de palier selon la revendication 12, **caractérisé en ce que** les éléments de serrage (35, 36 ; 35A, 35B, 36A, 36B) sont réalisés avec au moins une région en forme de coin qui peut être disposée à chaque fois entre les dispositifs d'insertion (9, 10) et le ressort à lame transversal (1) ou entre les dispositifs d'insertion (9, 10) et l'élément de bague de palier (31).

14. Dispositif de palier selon la revendication 12 ou 13, **caractérisé en ce qu'**à chaque fois au moins une partie des éléments de serrage (35, 36) peut être amenée en liaison fonctionnelle avec l'élément de bague de palier (31) pour générer une force de précontrainte du côté des éléments de serrage sur les dispositifs d'insertion (9, 10) et le ressort à lame transversal (1) et la force de précontrainte peut être supportée sur un épaulement (40) de l'élément de bague de palier (31).

15. Dispositif de palier selon l'une quelconque des revendications 1 à 14, **caractérisé en ce que** les éléments de palier (9A, 10A) réalisés avec une plus faible rigidité viennent en prise par le dessus à chaque fois au moins en partie avec le ressort à lame transversal (1) par des régions de butée (18A, 19B) dans l'état monté dans la direction longitudinale du véhicule (x) et dans la direction verticale du véhicule (z), les régions de butée (18A à 19B) étant réalisées dans des régions d'appui tournées vers le ressort à lame transversal (1) et/ou dans les régions d'appui tournées vers les coques de palier extérieures (6, 7), de préférence avec des saillies et/ou des évidements orientés au moins approximativement dans la direction longitudinale du véhicule (x).
